# EUROPEAN PATENT SPECIFICATION

(11) **EP 4 007 494 B1**
(45) Date of publication and mention of the grant of the patent: **18.03.2026**
(21) Application number: 20757738.8
(22) Date of filing: 30.07.2020
(51) Int. Cl.: A01P 21/00, A01N 63/22

(54) **METHOD OF IMPROVING COLD STRESS TOLERANCE AND CROP SAFETY**
VERFAHREN ZUR VERBESSERUNG DER KÄLTESTRESSTOLERANZ UND DER PFLANZENSICHERHEIT
PROCÉDÉ D'AMÉLIORATION DE LA TOLÉRANCE AU STRESS DÛ AU FROID ET DE L'INNOCUITÉ DES CULTURES

(30) Priority: 01.08.2019 US 201962881782 P
(43) Date of publication of application: 08.06.2022
(73) Proprietor: Bayer CropScience LLC, St. Louis MO 63167 (US)
(72) Inventor: MANAVALAN, Lakshmi, Praba, Woodland, CA 95776 (US); AMBROSE MICHAEL, Karen, Sacramento, CA 95618 (US); MAHMOOD, Saman, Wooland, CA 95776 (US); SAELEE, Kao, Sacramento, CA 95614 (US)
(74) Representative: BIP Patents
(86) International application number: PCT/US2020/044306
(87) International publication number: WO 2021/022069

(56) References cited:
- WO-A1-2013/178648
- WO-A1-2014/036474
- SHALINI TIWARI ET AL: "Bacillus amyloliquefaciens Confers Tolerance to Various Abiotic Stresses and Modulates Plant Response to Phytohormones through Osmoprotection and Gene Expression Regulation in Rice", FRONTIERS IN PLANT SCIENCE, vol. 8, 29 August 2017 (2017-08-29), XP055735671, DOI: 10.3389/fpls.2017.01510

## Description

### TECHNICAL FIELD

The present invention relates to the use of *Bacillus* strains for improving cold stress tolerance and crop safety and related methods of plant treatment wherein one or more *Bacillus* strains are applied to a plant, a plant part, plant propagation material or the habitat the plant is growing in for improving cold stress tolerance and crop safety.

### BACKGROUND

In climates where unexpected temperature drops and frosts occur into the spring, plants are often exposed to cold stress. Cold stress affects all aspects of plant cellular function. Cold stress-induced dehydration causes membrane disintegration. These cold-induced changes negatively affect plant growth and development.

Crops, which have suffered chilling injury or frost damage, show dieback symptoms, for example on leaves, flowers and buds. Cold stress may also cause poor germination, stunted seedlings, withering, and reduced tillering. Frost-damaged flowers develop no fruit at all or else deformed fruit or fruit with skin damage, which reduces the marketability of the fruit. Severe chilling injury and frost damage can result in the death of the entire crop.

Chilling injury and frost damage are therefore important loss factors for the agricultural sector. Existing possibilities for avoiding chilling injury and frost damage are unsatisfactory because of their complexity or the fact that the results are frequently not reproducible. Possibilities which have been explored include breeding of chill- and frost-resistant crop varieties, starting off cold-sensitive crops in the greenhouse and subsequently planting them in the field as late as possible, cultivation under plastic film, circulation of air in the stand, blowing in warm air, placing heaters in the stand, and irrigation frost protection. Thus, there is a great need to identify agents that protect plants from cold stress.

Another challenge in agriculture arises from the fact that active ingredients used to control microorganisms, weeds or animal pests might have negative effects on the target crop, particularly at early growth. Examples include growth distortion, necrotic areas, bleaching, oxidative damage, and stunting. These effects depend on the crop, its life stage, the concentration of the active ingredient, and the environment in which the crop is growing. For example certain herbicides which are chemically similar to auxins will act in higher concentration as herbicides while they might act as a growth enhancer in lower concentrations. The underlying mechanisms of such impacts on the plants are not yet understood, but processes like oxidative stress or cellular damage might play a role.

These unwanted effects are of particular concern in seeds, germinating seeds, and seedlings when the active ingredient has been applied as a seed treatments or soil drench. One example for such effects of active ingredients is the so called "halo-effect" of the fungicide and nematicide fluopyram in soy seedlings at the early establishment phase whereas at later growth stages starting as of BBCH stage 13 these effects are overcome by the plants. Therefore it is very important to ensure that these effects are mitigated at the plant establishment phase.

Current examples of mitigation measures include lowering the dosage rates which often leads also to a decreased efficacy of the active ingredients. Consequently, it is of interest to provide agents which enhance crop safety, in particular in seeds, germinating seeds and seedlings, in particular at the early establishment of plants after treatment with active ingredients.

WO2014/036474 discloses the use of *B. amyloliquefaciens* strain QST713 against salt stress in rice plants. Shalini Tiwari et al. (Frontiers in Plant Science Vol. 8 (2017) discloses the application of a *B. amyloliquefaciens* strain for improving tolerance of plants to various stresses. WO2013/178648 discusses possible improvements in plant health through application of compositions comprising *Bacillus* species.

It is therefore an object of the present invention to provide a method for improving cold stress tolerance and/or crop safety in plants.

### SUMMARY

The present invention describes the use of *Bacillus subtilis* QST713 for improving tolerance in a plant exposed to cold stress.

In some embodiments, the improvement in tolerance to cold stress in the plant is relative to a corresponding plant that has experienced the cold stress but has not been treated with *Bacillus subtilis* QST713.

According to the invention, tolerance to cold stress refers to the capacity of the plant to recover from an exposure during a certain period of time to certain temperatures that adversely affect its normal growth, in particular cold temperatures. In some aspects, the improved tolerance to cold stress is an effect selected from the group consisting of: a) an increase in germination after cold stress; b) an increase in cotyledon, unifoliate, and/or trifoliate leaf area after cold stress; c) an increase in plant fresh weight and/or dry weight after cold stress; d) an increase in plant height after cold stress; e) an improved plant vigor after cold stress; and f) an increase in chlorophyll production after cold stress. In one embodiment, the increase in chlorophyll production is measured as a chlorophyll to anthocyanin ratio.

In certain embodiments, the *Bacillus subtilis* QST713 is applied to the plant, to a part of the plant and/or to a locus of the plant, where the plants has grown, grows or is intended to grow. In some embodiments, the *Bacillus subtilis* QST713 is applied to the seeds of the plant, either directly to the seed before sowing or indirectly via soil treatment right after sowing over the sown seed while the seed is germinating and starts growing. Accordingly, in some embodiments, the *Bacillus subtilis* QST713 is applied using an application methods selected from the group comprising of soil treatment, drench application, in-furrow treatment and a seed treatment.

In one aspect, when the seed is directly treated before sowing, the *Bacillus subtilis* QST713 is applied at an application rate of about 1 × 10² colony forming units (CFU) per seed to about 1 × 10⁹ CFU per seed. In other aspects, the *Bacillus subtilis* QST713 is applied at an application rate of about 1 × 10² CFU per seed to about 1 × 10⁸ CFU per seed, about 1 × 10² CFU per seed to about 1 × 10⁷ CFU per seed, about 1 × 10³ CFU per seed to about 1 × 10⁹ CFU per seed, about 1 × 10³ CFU per seed to about 1 × 10⁸ CFU per seed, about 1 × 10³ CFU per seed to about 1 × 10⁷ CFU per seed, about 1 × 10⁴ CFU per seed to about 1 × 10⁹ CFU per seed, about 1 × 10⁴ CFU per seed to about 1 × 10⁸ CFU per seed, about 1 × 10⁴ CFU per seed to about 1 × 10⁷ CFU per seed, about 1 × 10⁵ CFU per seed to about 1 × 10⁷ CFU per seed, about 1 × 10⁵ CFU per seed to about 1 × 10⁶ CFU per seed, or about 1 × 10⁶ CFU per seed.

In yet another embodiment, when the seed or the plant, in particular the growing plant, is treated indirectly via soil treatment, the *Bacillus subtilis* QST713 is applied at a rate of about 1 × 10⁴ to about 1 × 10⁸ CFU per gram of soil. In other embodiments, the *Bacillus subtilis* QST713 is applied at a rate of about 1 × 10⁵ to about 1 × 10⁸ CFU per gram of soil, at a rate of about 1 × 10⁶ to about 1 × 10⁸ CFU per gram of soil, at a rate of about 1 × 10⁴ to about 1 × 10⁷ CFU per gram of soil, or at a rate of about 1 × 10⁵ to about 1 × 10⁷ CFU per gram of soil.

In some embodiments, the cold stress comprises exposure to temperatures below about 10°C. In other embodiments, the cold stress comprises exposure to temperatures below about 9°C, below about 8°C, below about 7°C, below about 6°C, below about 5°C, below about 4°C, below about 3°C, below about 2°C, below about 1°C, or below about 0°C.

In certain aspects, the cold stress comprises exposure of the plant or plant parts, for example the seed, or the location of the plant to temperatures between about 0°C and 10°C. In other aspects, the cold stress comprises exposure to temperatures between about 0°C and 9°C, between about 0°C and 8°C, between about 0°C and 7°C, between about 0°C and 6°C, between about 0°C and 5°C, or between about 0°C and 4°C. In certain aspects, the cold stress comprises exposure of the plant or plant parts or the location of the plant to temperatures between about 0°C and 10°C up to one day. In one aspect the cold stress comprises exposure of the plant or plant parts or the location of the plant to temperatures between about 0°C and 10°C up to three days. In one aspect the cold stress comprises exposure of the plant or plant parts or the location of the plant to temperatures between about 0°C and 10°C up to seven days. In one aspect the cold stress comprises exposure of the plant or plant parts or the location of the plant to temperatures between about 0°C and 10°C up to ten days. In one aspect the cold stress comprises exposure of the plant or plant parts or the location of the plant to temperatures between about 0°C and 10°C more than 10 days. In another aspect the cold stress comprises exposure of the plant or plant parts or the location of the plant to temperatures between about 0°C and 8°C up to one day. In one aspect the cold stress comprises exposure of the plant or plant parts or the location of the plant to temperatures between about 0°C and 8°C up to three days. In one aspect the cold stress comprises exposure of the plant or plant parts or the location of the plant to temperatures between about 0°C and 8°C up to seven days. In one aspect the cold stress comprises exposure of the plant or plant parts or the location of the plant to temperatures between about 0°C and 8°C up to ten days. In one aspect the cold stress comprises exposure of the plant or plant parts or the location of the plant to temperatures between about 0°C and 10°C more than ten days. In other aspects, the cold stress comprises exposure to temperatures between about 0°C and 9°C, between about 0°C and 8°C, between about 0°C and 7°C, between about 0°C and 6°C, between about 0°C and 5°C, or between about 0°C and 4°C.

In one embodiment, the plant is selected from the group consisting of soybean, corn, wheat, triticale, barley, oat, rye, rape, millet, rice, sunflower, cotton, sugar beet, pome fruit, stone fruit, citrus, banana, strawberry, blueberry, almond, grape, mango, papaya, peanut, potato, tomato, pepper, cucurbit, cucumber, melon, watermelon, garlic, onion, broccoli, carrot, cabbage, bean, dry bean, canola, pea, lentil, alfalfa, trefoil, clover, flax, elephant grass, grass, lettuce, sugarcane, tea, tobacco and coffee; each in its natural or genetically modified form.

In other aspects, the present invention relates to a method for treating a plant in need of improving tolerance to cold stress, the method comprising applying *Bacillus subtilis* QST713 to the plant, to a part of the plant and/or to a locus of the plant in an effective amount to improve tolerance to cold stress.

In certain aspects, the *Bacillus subtilis* QST713 is applied as a soil, in-furrow or as drench, treatment and/or a seed treatment. In other aspects, the *Bacillus subtilis* QST713 is applied at an application rate of about 1 × 10² colony forming units (CFU) per seed to about 1 x 10⁹ CFU per seed. In other aspects, the *Bacillus subtilis* QST713 is applied at an application rate of about 1 × 10² CFU per seed to about 1 × 10⁸ CFU per seed, about 1 × 10² CFU per seed to about 1 × 10⁷ CFU per seed, about 1 × 10³ CFU per seed to about 1 × 10⁹ CFU per seed, about 1 × 10³ CFU per seed to about 1 × 10⁸ CFU per seed, about 1 × 10³ CFU per seed to about 1 × 10⁷ CFU per seed, about 1 × 10⁴ CFU per seed to about 1 × 10⁹ CFU per seed, about 1 × 10⁴ CFU per seed to about 1 × 10⁸ CFU per seed, about 1 × 10⁴ CFU per seed to about 1 × 10⁷ CFU per seed, about 1 × 10⁵ CFU per seed to about 1 × 10⁷ CFU per seed, about 1 × 10⁵ CFU per seed to about 1 × 10⁶ CFU per seed, or about 1 × 10⁶ CFU per seed.

In yet another embodiment, the *Bacillus subtilis* QST713 is applied at a rate of about 1 × 10⁴ to about 1 × 10⁸ CFU per gram of soil. In other embodiments, the *Bacillus subtilis* QST713 is applied at a rate of about 1 × 10⁵ to about 1 × 10⁸ CFU per gram of soil, at a rate of about 1 × 10⁶ to about 1 × 10⁸ CFU per gram of soil, at a rate of about 1 × 10⁴ to about 1 × 10⁷ CFU per gram of soil, or at a rate of about 1 × 10⁵ to about 1 × 10⁷ CFU per gram of soil.

In another embodiment, the *Bacillus subtilis* QST713 is applied simultaneously or sequentially with at least one active ingredient. In some aspects, the at least one active ingredient is selected from the group comprising Flupyradifurone, Prothioconazole, Tebuconazole, and Fluopyram.

### BRIEF DESCRIPTION OF THE DRAWINGS

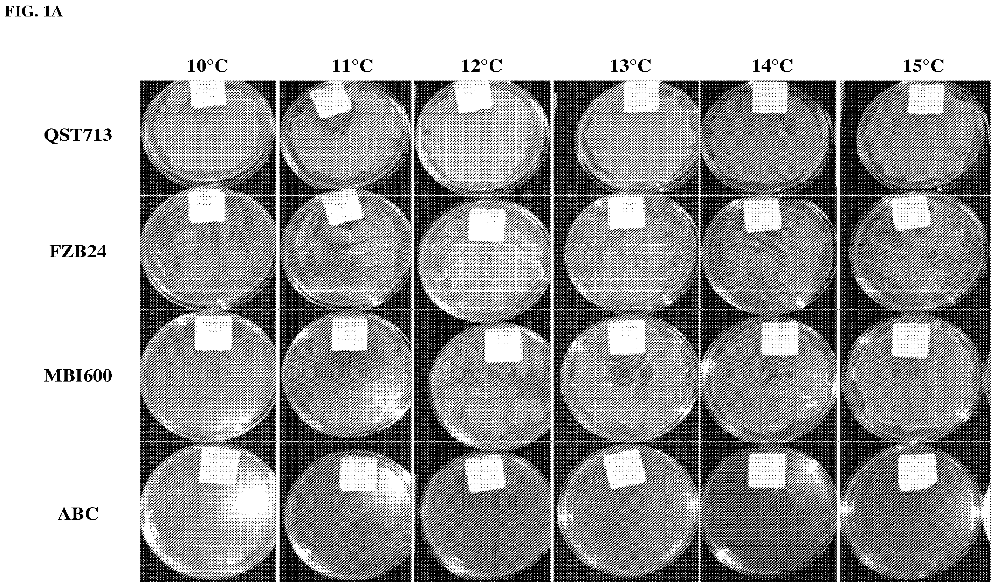

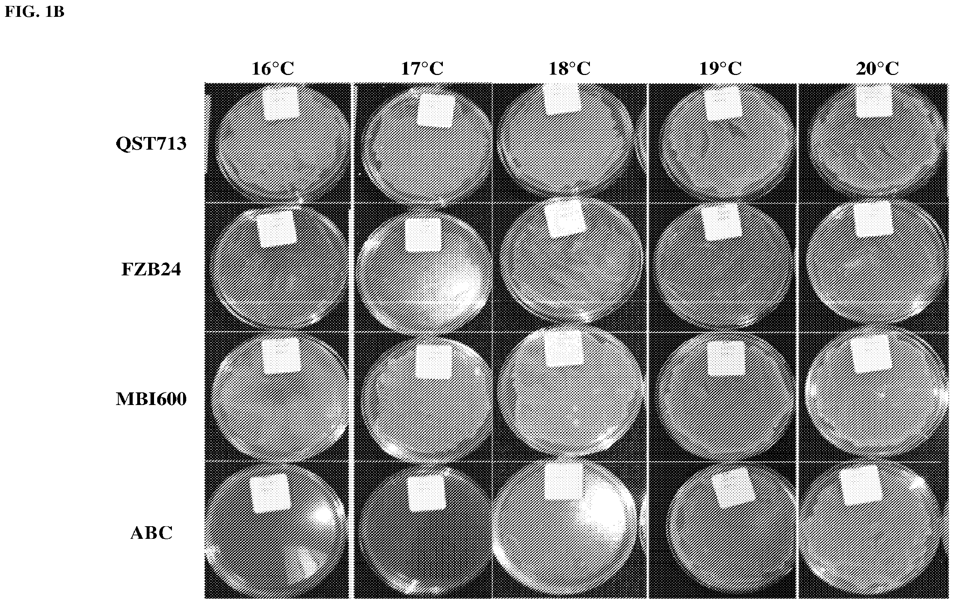

**FIGs. 1A** and **1B** depict the growth of *Bacillus subtilis* QST713, *Bacillus subtilis* var. *amyloliquefaciens* strain FZB24, *Bacillus subtilis* strain MBI 600, and *Bacillus amyloliquefaciens* strain ABC on agar plates after a 24-hour period of cold stress at 10°C, 11°C, 12°C, 13°C, 14°C, 15°C, 16°C, 17°C, 18°C, 19°C, or 20°C followed by a 24-hour period of recovery at room temperature.

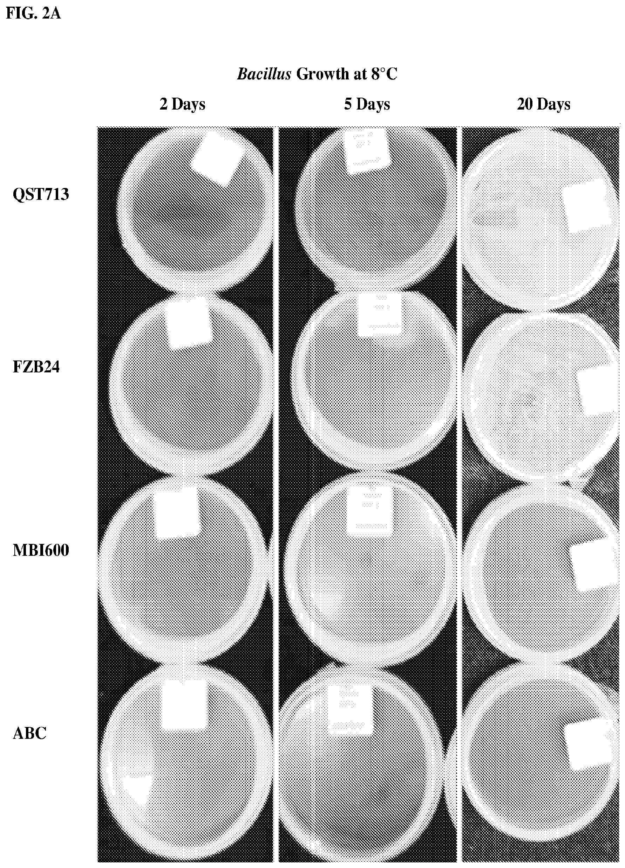

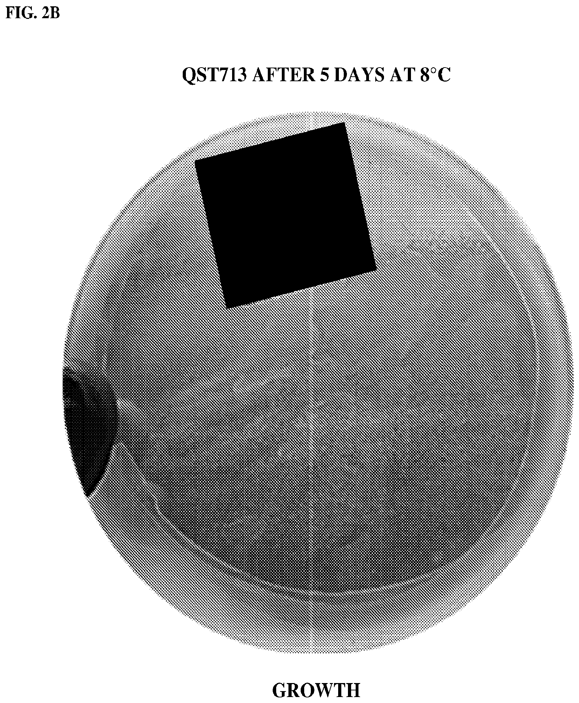

**FIG. 2A** depicts the growth of *Bacillus subtilis* QST713, *Bacillus subtilis* var. *amyloliquefaciens* strain FZB24, *Bacillus subtilis* strain MBI 600, and *Bacillus amyloliquefaciens* strain ABC on agar plates at 8°C after 2 days, after 5 days, and after 20 days. **FIG 2B** presents a magnified image of the agar plate with *Bacillus subtilis* QST713 at 8°C after 5 days in the which can be seen more clearly bacterial colonies growing.

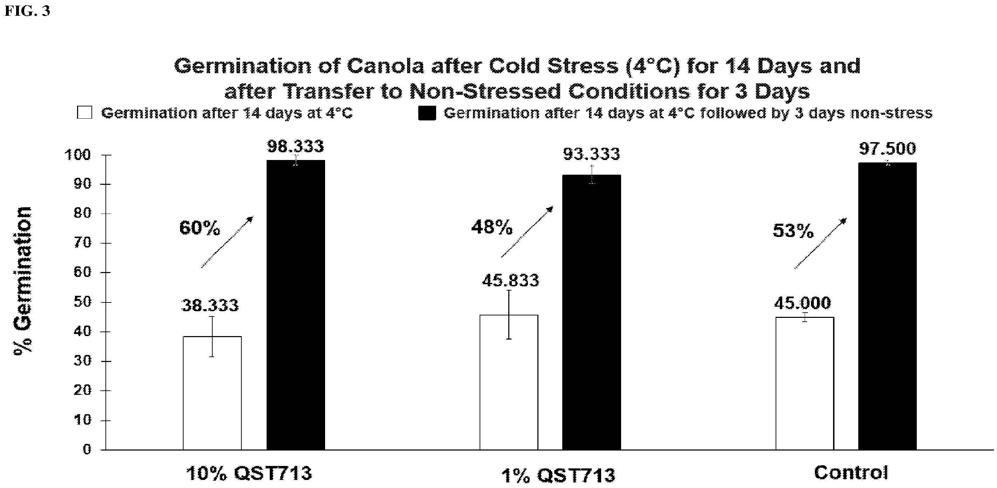

**FIG. 3** depicts the average germination rates of cold stressed canola seedlings (n=120) treated with a 10% dilution of a whole broth from *Bacillus subtilis* QST713 ("10% QST713"), a 1% dilution of a whole broth from *Bacillus subtilis* QST713 ("1% QST713"), or left untreated ("Control") after 14 days at 4°C and after a subsequent recovery period of 3 days without cold stress.

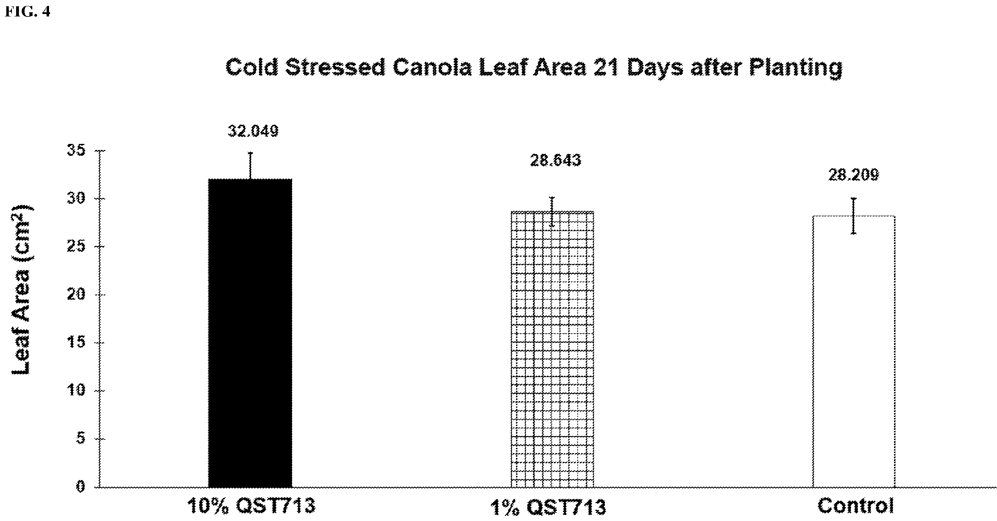

**FIG. 4** depicts the average leaf areas of cold stressed canola seedlings (n=120) treated with a 10% dilution of whole broth from *Bacillus subtilis* QST713 ("10% QST713"), a 1% dilution of whole broth from *Bacillus subtilis* QST713 ("1% QST713"), or left untreated ("Control") at 21 days after planting.

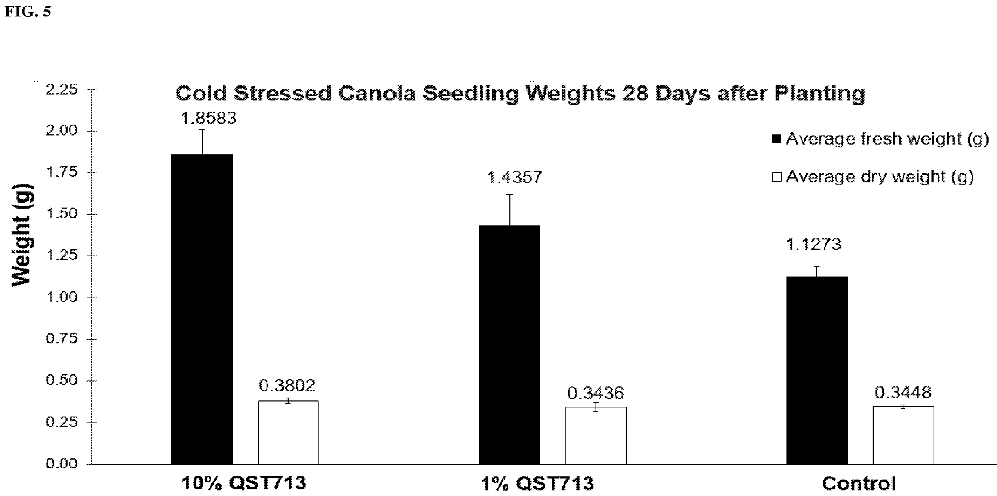

**FIG. 5** depicts the average fresh and dry weights of cold stressed canola seedlings (n=120) treated with a 10% dilution of whole broth from *Bacillus subtilis* QST713 ("10% QST713"), a 1% dilution of whole broth from *Bacillus subtilis* QST713 ("1% QST713"), or left untreated ("Control") at 28 days after planting.

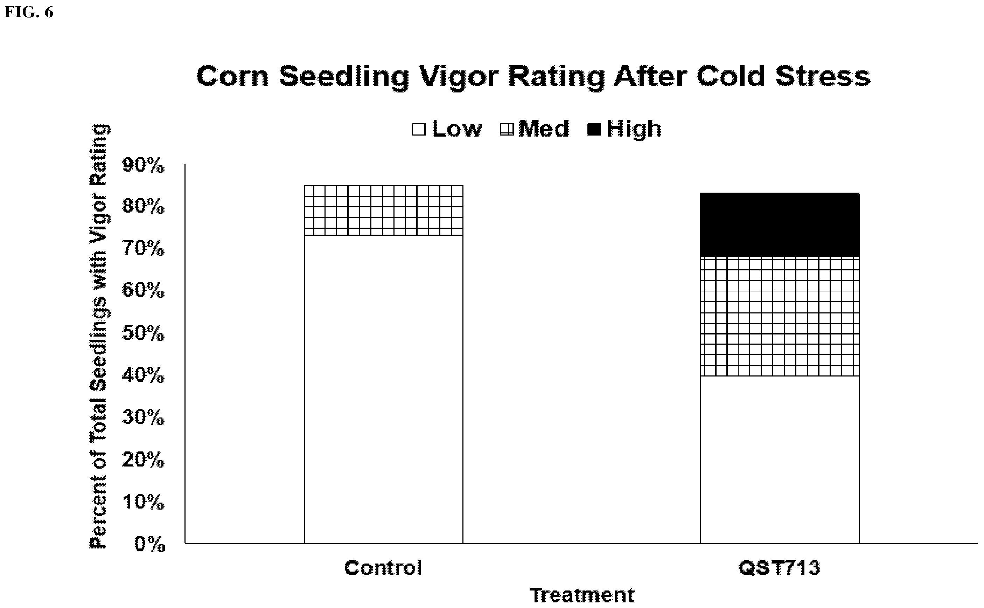

**FIG. 6** depicts vigor ratings for cold stressed corn seedlings treated with *Bacillus subtilis* QST713 or left untreated (i.e., "Control"). The seedlings were subjected to cold stress for seven days after planting and rated for seedling quality at fourteen days after planting.

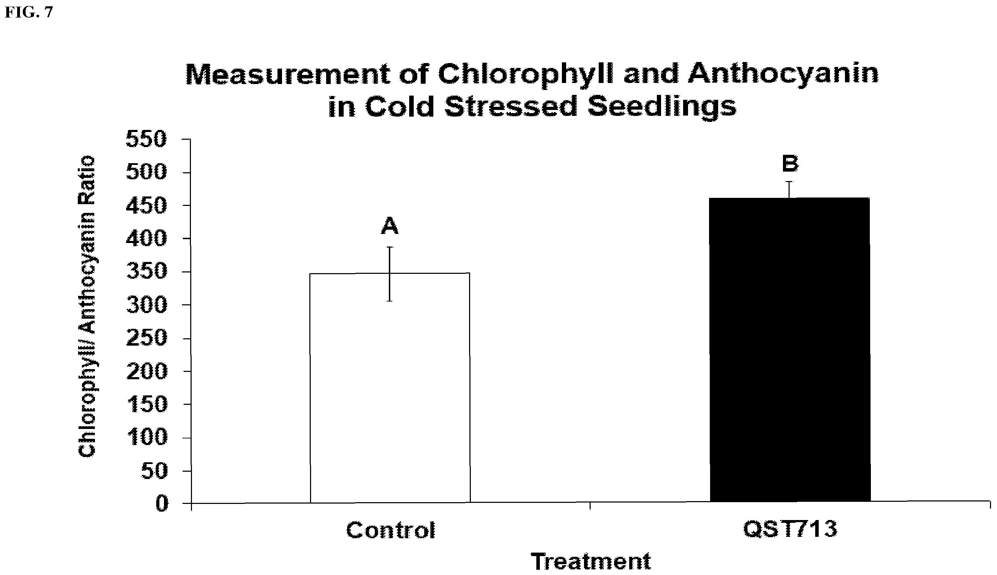

**FIG. 7** depicts the average chlorophyll/anthocyanin ratio in leaves from corn seedlings treated with *Bacillus subtilis* QST713 or left untreated (i.e., "Control"). The seedlings were subjected to cold stress for seven days after planting and evaluated for chlorophyll and anthocyanin levels at fourteen days after planting. Letters above each bar indicate statistically significant differences between treatment groups at p<0.01.

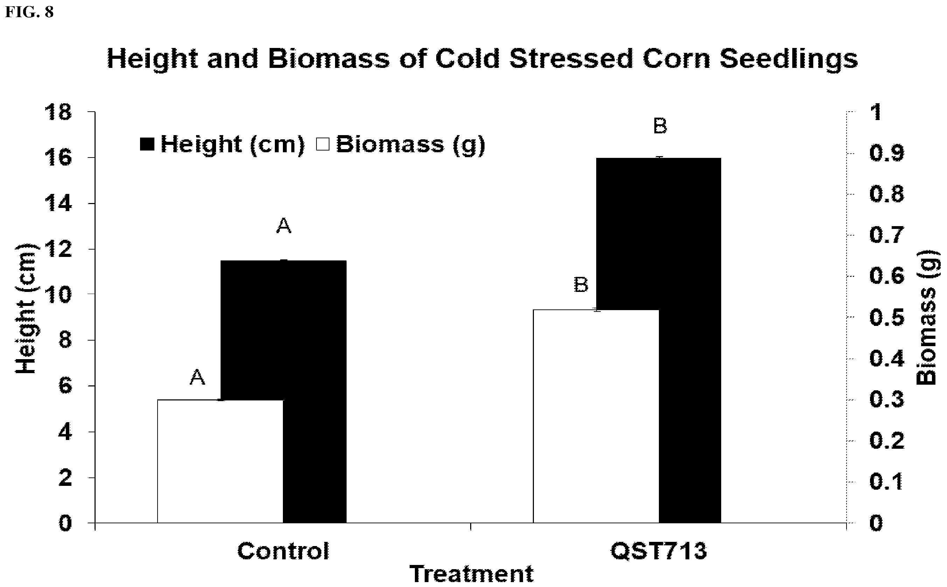

**FIG. 8** depicts height (cm) and biomass (g) measurements for corn seedlings treated with *Bacillus subtilis* QST713 or left untreated (i.e., "Control"). The corn seedlings were subjected to cold stress for seven days after planting and evaluated for height (cm) and biomass (g) at twenty-two days after planting. The measurements represent the averages from 50 measurements per treatment group. Letters above each bar indicate statistically significant differences between treatment groups within the height and biomass measurements, respectively, at p<0.01.

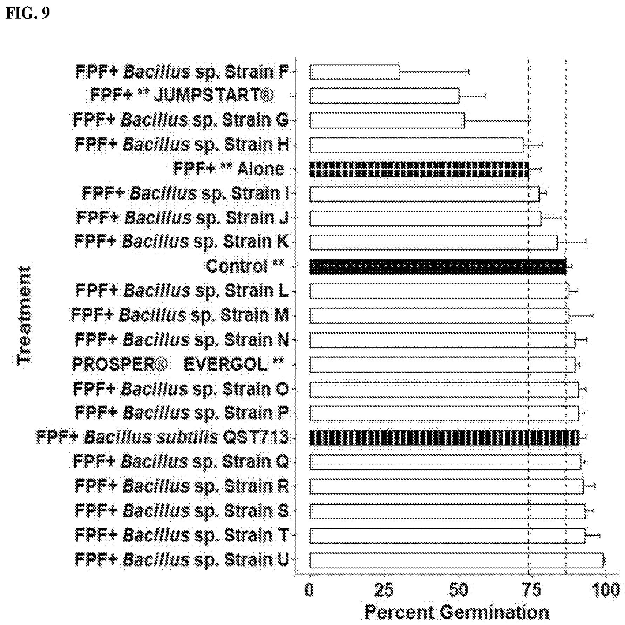

**FIG. 9** depicts the effects of various *Bacillus* sp. strains when applied with flupyradifurone (FPF) to canola seeds in a blotter paper germination assay.

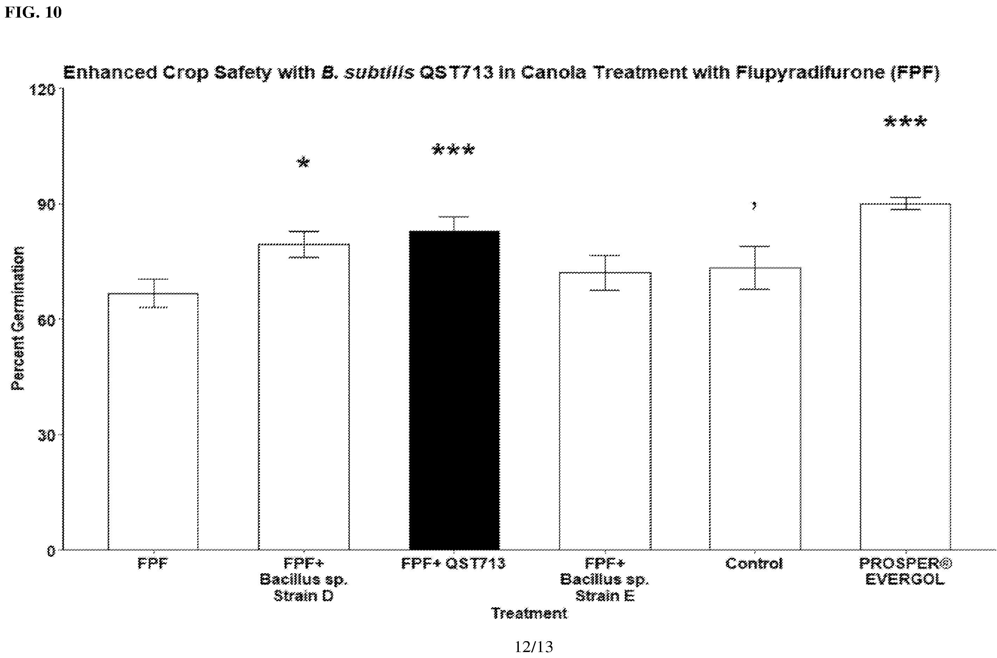

**FIG. 10** depicts the effects of *Bacillus subtilis* QST713 when applied with FPF to canola seeds in a field soil germination assay. Treatments marked * were significantly different from the FPF treatment group with a p value < 0.05, and those marked with *** were significantly different from the FPF treatment group with a p value < 0.0001.

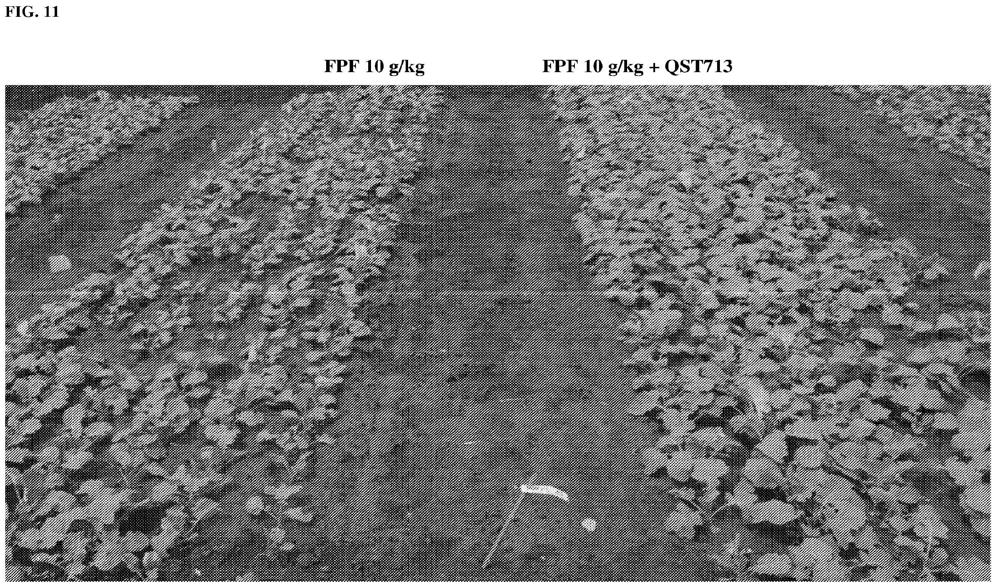

**FIG. 11** depicts a representative image of a canola field trial 18 days after emergence with plants treated with 10 g FPF per kg of seed alone ("FPF 10g/kg") or in combination with *Bacillus subtilis* QST713 at 1 × 10⁶ CFU per seed ("FPF 10g/kg + QST713"). These canola seedlings were planted under conditions of cold stress when the ambient temperature was around 10°C.

### DETAILED DESCRIPTION

The microorganisms and particular strains described herein, unless specifically noted otherwise, are all separated from nature and grown under artificial conditions such as in shake flask cultures or through scaled-up manufacturing processes, such as in bioreactors to maximize bioactive metabolite production, for example. Growth under such conditions leads to strain "domestication." Generally, such a "domesticated" strain differs from its counterparts found in nature in that it is cultured as a homogenous population that is not subject to the selection pressures found in the natural environment but rather to artificial selection pressures.

As used herein, the verb "comprise" as is used in this description and in the claims and its conjugations is used in its non-limiting sense to mean that items following the word are included, but items not specifically mentioned are not excluded. In addition, reference to an element by the indefinite article "a" or "an" does not exclude the possibility that more than one of the elements are present, unless the context clearly requires that there is one and only one of the elements. The indefinite article "a" or "an" thus usually means "at least one".

The SERENADE^{®} product (EPA Registration No. 69592-12) contains a unique strain of *Bacillus subtilis* (strain QST713) and many different lipopeptides that work synergistically to destroy disease pathogens and provide superior antimicrobial activity. The SERENADE^{®} product is used to protect plants such as vegetables, fruit, nut, and vine crops against diseases such as Fire Blight, Botrytis, Sour Rot, Rust, Sclerotinia, Powdery Mildew, Bacterial Spot and White Mold. The SERENADE^{®} products are available as either liquid or dry formulations, which can be applied as a foliar and/or soil treatments. Copies of EPA Master Labels for SERENADE^{®} products, including SERENADE^{®} ASO, SERENADE^{®} MAX, SERENADE^{®} OPTIMUM (or OPTI), and SERENADE SOIL^{®}, are publicly available through National Pesticide Information Retrieval System's (NPIRS^{®}) US EPA/OPP Pesticide Product Label System (PPLS).

SERENADE^{®} ASO (Aqueous Suspension-Organic) contains 1.34% of dried QST713 as an active ingredient and 98.66% of other ingredients. SERENADE^{®} ASO is formulated to contain a minimum of 1 × 10⁹ cfu/g of QST713 while the maximum amount of QST713 has been determined to be 3.3 × 10¹⁰ cfu/g. Alternate commercial names for SERENADE^{®} ASO include SERENADE BIOFUNGICIDE^{®}, SERENADE SOIL^{®} and SERENADE^{®} GARDEN DISEASE. For further information, see the U.S. EPA Master Labels for SERENADE^{®} ASO dated January 4, 2010 and SERENADE SOIL^{®}.

SERENADE^{®} MAX contains 14.6% of dried QST713 as an active ingredient and 85.4% of other ingredients. SERENADE^{®} MAX is formulated to contain a minimum of 7.3 × 10⁹ cfu/g of QST713 while the maximum amount of QST713 has been determined to be 7.9 × 10¹⁰ cfu/g. For further information, see the U.S. EPA Master Label for SERENADE^{®} MAX.

SERENADE^{®} OPTIMUM (or OPTI) contains 26.2% of dried QST713 as an active ingredient and 73.8% of other ingredients. SERENADE^{®} OPTIMUM (or OPTI) is formulated to contain a minimum of 1.31 × 10¹⁰ cfu/g of QST713. For further information, see the U.S. EPA Master Label for SERENADE^{®} OPTIMUM (or OPTI).

NRRL is the abbreviation for the Agricultural Research Service Culture Collection, an international depositary authority for the purposes of deposing microorganism strains under the Budapest Treaty on the International Recognition of the Deposit of Microorganisms for the Purposes of Patent Procedure, having the address National Center for Agricultural Utilization Research, Agricultural Research Service, U.S. Department of Agriculture, 1815 North University Street, Peoria, Illinois 61604, U.S.A.

*Bacillus subtilis* QST713, its mutants, its supernatants, and its lipopeptide metabolites, and methods for their use to control plant pathogens and insects are fully described in U.S. Patent Nos. 6,060,051; 6,103,228; 6,291,426; 6,417,163; and 6,638,910. In these U.S. patents, the strain is referred to as AQ713, which is synonymous with QST713. *Bacillus subtilis* QST713 has been deposited with the NRRL on May 7, 1997, under the provisions of the Budapest Treaty on the International Recognition of the Deposit of Microorganisms for the Purpose of Patent Procedure under Accession Number B-21661. Any references in this specification to QST713 refer to *Bacillus subtilis* QST713 (aka AQ713) as present in the SERENADE^{®} products, deposited under NRRL Accession No. B-21661, or prepared in bioreactors or shake flasks under conditions that simulate production of the SERENADE^{®} product.

At the time of filing U.S. Patent Application No. 09/074,870 in 1998, which corresponds to the above patents, the QST713 strain was designated as a *Bacillus subtilis* based on classical, physiological, biochemical and morphological methods. Taxonomy of the *Bacillus* species has evolved since then, especially in light of advances in genetics and sequencing technologies, such that species designation is based largely on DNA sequence rather than the methods used in 1998. After aligning protein sequences from *B. amyloliquefaciens* FZB42, *B. subtilis* 168 and QST713, approximately 95% of proteins found in *B. amyloliquefaciens* FZB42 are 85% or greater identical to proteins found in QST713; whereas only 35% of proteins in *B. subtilis* 168 are 85% or greater identical to proteins in QST713. However, even with the greater reliance on genetics, there is still taxonomic ambiguity in the relevant scientific literature and regulatory documents, reflecting the evolving understanding of *Bacillus* taxonomy over the past 15 years. For example, a pesticidal product based on *B. subtilis* strain FZB24, which is as closely related to QST713 as is FZB42, is classified in documents of the Environmental Protection Agency as *B. subtilis* var. *amyloliquefaciens.* Due to these complexities in nomenclature, this particular *Bacillus* species is variously designated, depending on the document, as *B. subtilis, B. amyloliquefaciens,* and *B. subtilis* var. *amyloliquefaciens.* Therefore, we have retained the *B. subtilis* designation of QST713 rather than changing it to *B. amyloliquefaciens,* as would be expected currently based solely on sequence comparison and inferred taxonomy. As regulatory authorities in various countries may require registration under any one of the possible taxonomic classifications, it is to be understood for purposes of this patent application that the strain deposited as *Bacillus subtilis* QST713 and assigned NRRL Accession No. B-21661 is equivalent to *Bacillus amyloliquefaciens* QST713.

As explained in detail in international patent publication number WO 2012/087980, cultures of *B. subtilis* QST713 are actually a mixture of wild type cells and a relatively small percentage of variant cell types, which have been designated as "sandpaper cells", based on the morphology of their colonies.

The *B. subtilis* strain AQ30002 (aka QST30002) or AQ30004 (aka QST30004), deposited as Accession Nos. NRRL B-50421 and NRRL B-50455, respectively, which are described in International Patent Publication No. WO 2012/087980 or mutants of these *B. subtilis* strains having all of the physiological and morphological characteristics of *B. subtilis* strain AQ30002 (aka QST30002) or AQ30004 (aka QST30004) can also be used in the method of the invention, either alone or in mixture with *B. subtilis* QST713.

*Bacillus subtilis* var. *amyloliquefaciens* strain FZB24 (available from Novozymes as TAEGRO^{®} or TAEGRO^{®} ECO (EPA Registration No. 70127-5)) has been deposited and assigned Accession No. DSM 10271. *Bacillus subtilis* strain MBI 600 (available as SUBTILEX^{®} from BASF SE) has also been deposited and assigned Accession Number NRRL B-50595.

DSM is the abbreviation for Deutsche Sammlung van Mikroorganismen und Zellkulturen GmbH, an International Depositary Authority for the Purposes of Depositing Biological Material for the Purposes of Patenting under the Budapest Treaty on the International Recognition of the Deposit of Microorganisms for the Purposes of Patent Procedure, having the address Leibniz Institute DSMZ-German Collection of Microorganisms and Cell Cultures, InhoffenstraBe 7B, 38124 Braunschweig Germany.

The term "mutant" refers to a genetic variant derived from *Bacillus subtilis* QST713 or *Bacillus subtilis* var. *amyloliquefaciens* FZB24. In one embodiment, the mutant has all the identifying characteristics of *Bacillus subtilis* QST713 or *Bacillus subtilis* var. *amyloliquefaciens* FZB24. In another embodiment, mutants are genetic variants having a genomic sequence that has greater than about 85%, greater than about 90%, greater than about 95%, greater than about 98%, or greater than about 99% sequence identity to *Bacillus subtilis* QST713 or *Bacillus subtilis* var. *amyloliquefaciens* FZB24, respectively. Mutants may be obtained by treating *Bacillus subtilis* QST713 or *Bacillus subtilis* var. *amyloliquefaciens* FZB24 cells with chemicals or irradiation or by selecting spontaneous mutants from a population of *Bacillus subtilis* QST713 or *Bacillus subtilis* var. *amyloliquefaciens* FZB24 cells (such as phage resistant mutants) or by other means well known to those practiced in the art.

Compositions of the present invention can be obtained by culturing *Bacillus* strains or mutants thereof according to methods well known in the art, including by using the media and other methods described in U.S. Patent No. 6,060,051. Conventional large-scale microbial culture processes include submerged fermentation, solid-state fermentation, or liquid surface culture. Towards the end of fermentation, as nutrients are depleted, *Bacillus* cells begin the transition from growth phase to sporulation phase, such that the final product of fermentation is largely spores, metabolites and residual fermentation medium. Sporulation is part of the natural life cycle of *Bacillus* and is generally initiated by the cell in response to nutrient limitation. Fermentation is configured to obtain high levels of colony forming units of *Bacillus* and to promote sporulation. The bacterial cells, spores and metabolites in culture media resulting from fermentation may be used directly or concentrated by conventional industrial methods, such as centrifugation, tangential-flow filtration, depth filtration, and evaporation. Fermentation broth and broth concentrate are both referred to herein as "fermentation products." Compositions of the present invention include fermentation products. In some embodiments, the concentrated fermentation broth is washed, for example, via a diafiltration process, to remove residual fermentation broth and metabolites.

The fermentation broth or broth concentrate can be dried with or without the addition of carriers using conventional drying processes or methods such as spray drying, freeze drying, tray drying, fluidized-bed drying, drum drying, or evaporation.

The resulting dry products may be further processed, such as by milling or granulation, to achieve a specific particle size or physical format. Carriers, described below, may also be added post-drying.

Cell-free preparations of fermentation broth of the variants and strains of *Bacillus* of the present invention can be obtained by any means known in the art, such as extraction, centrifugation and/or filtration of fermentation broth. Those of skill in the art will appreciate that so-called cell-free preparations may not be devoid of cells but rather are largely cell-free or essentially cell-free, depending on the technique used (e.g., speed of centrifugation) to remove the cells. The resulting cell-free preparation may be dried and/or formulated with components that aid in its application to plants or to plant growth media. Concentration methods and drying techniques described above for fermentation broth are also applicable to cell-free preparations.

Metabolites of *Bacillus* can be obtained according to the methods set forth in U.S. Patent No. 6,060,051. The term "metabolites" as used herein may refer to semi-pure and pure or essentially pure metabolites or to metabolites that have not been separated from *Bacillus.* In some embodiments, after a cell-free preparation is made by centrifugation of fermentation broth, the metabolites may be purified by size exclusion filtration such as the SEPHADEX^{®} resins including LH-20, G10, and G15 and G25 that group metabolites into different fractions based on molecular weight cut-off, such as molecular weight of less than about 2000 Daltons, less than about 1500 Daltons, less than about 1000 Daltons and so on, as the lipopeptides are between 800 Daltons and 1600 Daltons.

Concentration methods and drying techniques described above for formulation of fermentation broth are also applicable to metabolites.

Compositions of the present invention may include formulation inerts added to compositions comprising cells, cell-free preparations or metabolites to improve efficacy, stability, and usability and/or to facilitate processing, packaging and end-use application. Such formulation inerts and ingredients may include carriers, stabilization agents, nutrients, or physical property modifying agents, which may be added individually or in combination. In some embodiments, the carriers may include liquid materials such as water, oil, and other organic or inorganic solvents and solid materials such as minerals, polymers, or polymer complexes derived biologically or by chemical synthesis. In some embodiments, the carrier is a binder or adhesive that facilitates adherence of the composition to a plant part, such as a seed or root. *See,* for example, Taylor, A.G., et al., "Concepts and Technologies of Selected Seed Treatments", Annu. Rev. Phytopathol. 28: 321-339 (1990). The stabilization agents may include anti-caking agents, anti-oxidation agents, desiccants, protectants or preservatives. The nutrients may include carbon, nitrogen, and phosphors sources such as sugars, polysaccharides, oil, proteins, amino acids, fatty acids and phosphates. The physical property modifiers may include bulking agents, wetting agents, thickeners, pH modifiers, rheology modifiers, dispersants, adjuvants, surfactants, antifreeze agents or colorants. In some embodiments, the composition comprising cells, cell-free preparation or metabolites produced by fermentation can be used directly with or without water as the diluent without any other formulation preparation. In some embodiments, the formulation inerts are added after concentrating fermentation broth and during and/or after drying.

Compositions of the present invention may include carriers, which are inert formulation ingredients added to compositions comprising a lipopeptide-containing fermentation product, cell-free preparations of lipopeptides or purified, semi-purified or crude extracts of lipopeptides to improve recovery, efficacy, or physical properties and/or to aid in packaging and administration. Such carriers may be added individually or in combination.

The inventive compositions can be used as such or, depending on their particular physical and/or chemical properties, in the form of their formulations or the use forms prepared therefrom, such as aerosols, capsule suspensions, cold-fogging concentrates, warm-fogging concentrates, encapsulated granules, fine granules, flowable concentrates for the treatment of seed, ready-to-use solutions, dustable powders, emulsifiable concentrates, oil-in-water emulsions, water-in-oil emulsions, macrogranules, microgranules, oil-dispersible powders, oil-miscible flowable concentrates, oil-miscible liquids, gas (under pressure), gas generating product, foams, pastes, pesticide coated seed, suspension concentrates, oil dispersion, suspo-emulsion concentrates, soluble concentrates, suspensions, wettable powders, soluble powders, dusts and granules, water-soluble and water-dispersible granules or tablets, water-soluble and water-dispersible powders for the treatment of seed, wettable powders, natural products and synthetic substances impregnated with active ingredient, and also microencapsulations in polymeric substances and in coating materials for seed, and also ULV cold-fogging and warm-fogging formulations.

In some embodiments, the inventive compositions are liquid formulations. Non-limiting examples of liquid formulations include suspension concentrations and oil dispersions. In other embodiments, the inventive compositions are solid formulations. Non-limiting examples of solid formulations include freeze-dried powders and spray-dried powders.

Compositions of the present invention may include formulation ingredients added to compositions of the present invention to improve recovery, efficacy, or physical properties and/or to aid in processing, packaging and administration. Such formulation ingredients may be added individually or in combination.

The formulation ingredients may be added to compositions comprising cells, cell-free preparations, isolated compounds, and/or metabolites to improve efficacy, stability, and physical properties, usability and/or to facilitate processing, packaging and end-use application. Such formulation ingredients may include agriculturally acceptable carriers, inerts, stabilization agents, preservatives, nutrients, or physical property modifying agents, which may be added individually or in combination. In some embodiments, the carriers may include liquid materials such as water, oil, and other organic or inorganic solvents and solid materials such as minerals, polymers, or polymer complexes derived biologically or by chemical synthesis. In some embodiments, the formulation ingredient is a binder, adjuvant, or adhesive that facilitates adherence of the composition to a plant part, such as leaves, seeds, or roots. See, for example, Taylor, A.G., et al., "Concepts and Technologies of Selected Seed Treatments," Annu. Rev. Phytopathol., 28: 321-339 (1990). The stabilization agents may include anti-caking agents, anti-oxidation agents, anti-settling agents, antifoaming agents, desiccants, protectants or preservatives. The nutrients may include carbon, nitrogen, and phosphorus sources such as sugars, polysaccharides, oil, proteins, amino acids, fatty acids and phosphates. The physical property modifiers may include bulking agents, wetting agents, thickeners, pH modifiers, rheology modifiers, dispersants, adjuvants, surfactants, film-formers, hydrotropes, builders, antifreeze agents or colorants. In some embodiments, the composition comprising cells, cell-free preparation and/or metabolites produced by fermentation can be used directly with or without water as the diluent without any other formulation preparation. In a particular embodiment, a wetting agent, or a dispersant, is added to a fermentation solid, such as a freeze-dried or spray-dried powder. In some embodiments, the formulation inerts are added after concentrating fermentation broth and/or during and/or after drying. A wetting agent increases the spreading and penetrating properties, or a dispersant increases the dispersability and solubility of the active ingredient (once diluted) when it is applied to surfaces. Exemplary wetting agents are known to those of skill in the art and include sulfosuccinates and derivatives, such as MULTIWET^{™} MO-70R (Croda Inc., Edison, NJ); siloxanes such as BREAK-THRU^{®} (Evonik, Germany); nonionic compounds, such as ATLOX^{™} 4894 (Croda Inc., Edison, NJ); alkyl polyglucosides, such as TERWET^{®} 3001 (Huntsman International LLC, The Woodlands, Texas); C12-C14 alcohol ethoxylate, such as TERGITOL^{®} 15-S-15 (The Dow Chemical Company, Midland, Michigan); phosphate esters, such as RHODAFAC^{®} BG-510 (Rhodia, Inc.); and alkyl ether carboxylates, such as EMULSOGEN^{™} LS (Clariant Corporation, North Carolina).

Fluopyram is defined to be the compound of the formula (I) 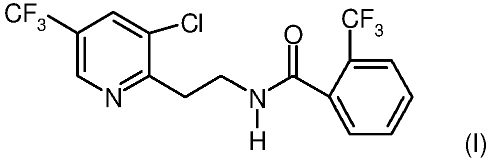 as well as the N-oxides of the compound thereof.

Fluopyram is a broad spectrum fungicide of the chemical class of pyridylethylbenzamide derivatives with penetrant and translaminar properties for foliar, drip, drench and seed treatment applications on a wide range of different crops against many economically important plant diseases. It is very effective in preventative applications against powdery mildew species, grey mold and white mold species. It has an efficacy against many other plant diseases. Fluopyram has shown activity in spore germination, germ tube elongation and mycelium growth tests. At the biochemical level, fluopyram inhibits mitochondrial respiration of target pests by blocking the electron transport in the respiratory chain of Succinate Dehydrogenase (complex II - SDH inhibitor).

Fluopyram and its manufacturing process starting from known and commercially available compounds is described in EP 1531673 and WO 2004/016088. In addition, Fluopyram also provides control of nematodes (WO 2008/0126922) and is known to be effective against Sudden Death Syndrome in soybeans (EP 2642854).

Enhanced crop safety can be defined as uniform germination, seedling emergence, seedling vigor such as increased hypocotyl length, increased plant height, reduction in leaf deformity, decrease in necrotic lesions, and overall increased size of plant structures such as cotyledons, unifoliates and trifoliates as well as altered plant metabolism and gene expression. Enhanced crop safety may comprise effects including but not limited to a higher percentage of healthy area of leaves or cotyledons, an overall larger area of cotyledons, unifoliates and/or trifoliates, an increase of chlorophyll fluorescence, higher chlorophyll content, a decrease of reactive oxygen species (ROS), and increased protein content. The enhanced crop safety is measured typically in the presence of an active ingredient with a potential to have an impact on crop safety in certain crops at certain concentrations at certain life stages. In one embodiment the enhanced crop safety is measured typically in the presence of an active ingredient with a potential to have an impact on crop safety in certain crops at certain concentrations at early establishment as defined below. Comparisons are made between plants treated with the active ingredient without *Bacillus subtilis* QST713 and/or a mutant thereof being present and plants treated with the active ingredient and *Bacillus subtilis* QST713 and/or a mutant thereof being present.

In one embodiment the amount of *Bacillus subtilis* QST713 and/or a mutant thereof applied may be sufficient to provide at least one crop safety improving effect selected from the group consisting of a higher percentage of healthy area of leaves or cotyledons, an overall larger area of cotyledons, unifoliates and/or trifoliates, a higher chlorophyll fluorescence, a higher chlorophyll content, a lower amount of reactive oxygen species, or an overall higher amount of protein. In one embodiment, the amount of *Bacillus subtilis* QST713 and/or a mutant thereof applied may be sufficient to provide at least one crop safety improving effect selected from the group consisting of a higher percentage of healthy area of leaves or cotyledons, an overall larger area of cotyledons, unifoliates and/or trifoliates, a higher chlorophyll fluorescence, a higher chlorophyll content, a lower amount of reactive oxygen species, or an overall higher amount of protein at early establishment.

The healthy area of cotyledons or leaves is assessed by visual inspection and quantitative analysis using an image based algorithm.

Early establishment is defined as the growth stages according to the BBCH scale from BBCH stage 00 until 13 (three leave stage).

Chlorophyll fluorescence (Fv'/Fm') measured under light-adapted conditions is an indicator for plant stress as disclosed in Maxwell K., Johnson G.N, "Chlorophyll Fluorescence - A Practical Guide," Journal of Experimental Botany, April 2000, vol. 51, no. 345, pp. 659-668.

Reactive Oxygen species as an indicator for plant stress is measured according to Jajics et al., Plants (Basel), September 2015, 4(3): 393-411.

In one embodiment, *Bacillus subtilis* QST713 and/or a mutant thereof may be applied simultaneously, for example mixed in tank mixes, with at least one active ingredient being Fluopyram, Clothianidin, Penflufen, Prothioconazole, Metalaxyl, Tebuconazole or Flupyradifurone. In another embodiment, *Bacillus subtilis* QST713 and/or a mutant thereof may be applied simultaneously, for example mixed in tank mixes, with at least one active ingredient being Fluopyram, Clothianidin, Penflufen, Prothioconazole, Metalaxyl, Tebuconazole or Flupyradifurone at early establishment.

In one embodiment *Bacillus subtilis* QST713 and/or a mutant thereof may be applied simultaneously, for example mixed in tank mixes with at least one insecticidal active ingredient being Flupyradifurone, Oxamyl, Chlorpyrifos-methyl, Bifenthrin, Lambda-Cyhalothrin, Tefluthrin, Acetamiprid, Clothianidin, Dinotefuran, Imidacloprid, Nitenpyram, Thiacloprid, Sulfoxaflor, Fipronil or Ethiprole. In another embodiment *Bacillus subtilis* QST713 and/or a mutant thereof may be applied simultaneously, for example mixed in tank mixes with at least one insecticidal active ingredient being Flupyradifurone, Oxamyl, Chlorpyrifos-methyl, Bifenthrin, Lambda-Cyhalothrin, Tefluthrin, Acetamiprid, Clothianidin, Dinotefuran, Imidacloprid, Nitenpyram, Thiacloprid, Sulfoxaflor, Fipronil or Ethiprole at early establishment.

In one embodiment *Bacillus subtilis* QST713 and/or a mutant thereof may be applied sequentially with at least one active ingredient being Fluopyram, Clothianidin, Penflufen, Prothioconazole, Metalaxyl, Tebuconazole or Flupyradifurone. In another embodiment *Bacillus subtilis* QST713 and/or a mutant thereof may be applied sequentially with at least one active ingredient being Fluopyram, Clothianidin, Penflufen, Prothioconazole, Metalaxyl, Tebuconazole or Flupyradifurone at early establishment.

In one embodiment *Bacillus subtilis* QST713 and/or a mutant thereof may be applied sequentially with at least one insecticidal active ingredient being Flupyradifurone, Oxamyl, Chlorpyrifos-methyl, Bifenthrin, Lambda-Cyhalothrin, Tefluthrin, Acetamiprid, Clothianidin, Dinotefuran, Imidacloprid, Nitenpyram, Thiacloprid, Sulfoxaflor, Fipronil or Ethiprole. In another embodiment *Bacillus subtilis* QST713 and/or a mutant thereof may be applied sequentially with at least one insecticidal active ingredient being Flupyradifurone, Oxamyl, Chlorpyrifos-methyl, Bifenthrin, Lambda-Cyhalothrin, Tefluthrin, Acetamiprid, Clothianidin, Dinotefuran, Imidacloprid, Nitenpyram, Thiacloprid, Sulfoxaflor, Fipronil or Ethiprole at early establishment.

In one embodiment *Bacillus subtilis* QST713 and/or a mutant thereof may be applied sequentially with at least one active ingredient being Fluopyram. In one embodiment *Bacillus subtilis* QST713 and/or a mutant thereof may be applied sequentially with at least one active ingredient being Fluopyram at early establishment.

In some embodiments, *Bacillus subtilis* QST713 and/or a mutant thereof is applied as seed treatment.

In some other embodiments, *Bacillus subtilis* QST713 and/or a mutant thereof is applied as soil treatment, for example as drench or in-furrow treatment.

A further aspect of the present invention relates in particular to seeds (dormant, primed, pregerminated or even with emerged roots and leaves) treated with *Bacillus subtilis* QST713 and/or a mutant thereof. The inventive seeds are used in methods for improving crop safety in seeds and emerged plants from the seeds and/or for improving cold stress tolerance.

*Bacillus subtilis* QST713 and/or a mutant thereof may be suitable for the treatment of seeds and young seedlings, so at the phase of Early Establishment as defined above. The roots and shoots of the growing plant are particularly sensitive to compounds causing problems in crop safety. Accordingly, there is great interest in improving crop safety in the seed and the germinating plant by using appropriate compositions.

In one embodiment a method for improving crop safety in seeds, germinating plants and emerged seedlings is described by treating the seeds with an inventive composition. The invention also relates to the use of the compositions for treating seeds for improving crop safety and/or cold stress tolerance in the seeds, the germinating plants and emerged seedlings. The invention also relates to the use of the compositions for treating seeds for improving crop safety and/or cold stress tolerance in the seeds, the germinating plants and emerged seedlings in early establishment. The invention further relates to seeds which have been treated with a composition comprising *Bacillus subtilis* QST713 and/or a mutant thereof for improving crop safety and/or cold stress tolerance.

One of the advantages of the present invention is that the treatment of the seeds with these compositions not only may improve crop safety in the seed itself, but also may improve crop safety in the resulting plants after emergence. In this way, the immediate treatment of the crop at the time of sowing or shortly thereafter protect plants as well as seed treatment prior to sowing. It is likewise considered to be advantageous that *Bacillus subtilis* QST713 and/or a mutant thereof or compositions comprising *Bacillus subtilis* QST713 and/or a mutant thereof may be used especially also for transgenic seed, in which case the plant which grows from this seed is capable of expressing a protein which acts against pests, herbicidal damage or abiotic stress.

*Bacillus subtilis* QST713 and/or a mutant thereof may be suitable for improving crop safety in seed of any plant variety which is used in agriculture, in the greenhouse production, in forests or in horticulture. More particularly, the seed is that of cereals (such as wheat, barley, rye, millet and oats), oilseed rape, maize, cotton, soybean, rice, potatoes, sunflower, beans, coffee, beet (e.g., sugar beet and fodder beet), peanut, vegetables (such as tomato, cucumber, onions and lettuce), lawns and ornamental plants. Of particular significance is the treatment of the seed of wheat, soybean, oilseed rape, maize and rice.

As also described below, the treatment of transgenic seed with *Bacillus subtilis* QST713 and/or a mutant thereof may be of particular significance. This refers to the seed of plants containing at least one heterologous gene which allows the expression of a polypeptide or protein, e.g., having insecticidal properties. These heterologous genes in transgenic seeds may originate, for example, from microorganisms of the species *Bacillus, Rhizobium, Pseudomonas, Serratia, Trichoderma, Clavibacter, Glomus* or *Gliocladium.* These heterologous genes preferably originates from *Bacillus* sp., in which case the gene product is effective against the European corn borer and/or the Western corn rootworm. Particularly preferably, the heterologous genes originate from *Bacillus thuringiensis.*

The composition is applied to seeds either alone or in a suitable formulation. Preferably, the seed is treated in a state in which it is sufficiently stable for no damage to occur in the course of treatment. In general, seeds can be treated at any time between harvest and sometime after sowing. It is customary to use seed which has been separated from the plant and freed from cobs, shells, stalks, coats, hairs or the flesh of the fruits. For example, it is possible to use seed which has been harvested, cleaned and dried down to a moisture content of less than 15% by weight. Alternatively, it is also possible to use seed which, after drying, for example, has been treated with water and then dried again, or seeds just after priming, or seeds stored in primed conditions or pre-germinated seeds, or seeds sown on nursery trays, tapes or paper.

When treating the seeds, it generally has to be ensured that the amount of the composition applied to the seed and/or the amount of further additives is selected such that the germination of the seed is not impaired, or that the resulting plant is not damaged.

In general, it is preferable to apply the compositions to the seed in the form of a suitable formulation. Suitable formulations and methods for seed treatment are known to those skilled in the art. *Bacillus subtilis* QST713 and/or a mutant thereof may be converted to the customary formulations relevant to on-seed applications. These formulations are prepared in a known manner, by mixing *Bacillus subtilis* QST713 and/or a mutant thereof with customary additives, for example customary extenders and solvents or diluents, dyes, wetting agents, dispersants, emulsifiers, antifoams, preservatives, secondary thickeners, adhesives, gibberellins, and also water.

Useful dyes which may be present in the seed dressing formulations usable in accordance with the invention are all dyes which are customary for such purposes. It is possible to use either pigments, which are sparingly soluble in water, or dyes, which are soluble in water. Examples include the dyes known by the names Rhodamine B, C.I. Pigment Red 112 and C.I. Solvent Red 1.

Useful wetting agents which may be present in the seed dressing formulations usable in accordance with the invention are all substances which promote wetting and which are conventionally used for the formulation of active agrochemical ingredients including plant growth regulators. Usable with preference are alkylnaphthalenesulphonates, such as diisopropyl- or diisobutylnaphthalenesulphonates.

Useful dispersants and/or emulsifiers which may be present in the seed dressing formulations usable in accordance with the invention are all nonionic, anionic and cationic dispersants conventionally used for the formulation of active agrochemical ingredients including plant growth regulators. Usable with preference are nonionic or anionic dispersants or mixtures of nonionic or anionic dispersants. Useful nonionic dispersants include especially ethylene oxide/propylene oxide block polymers, alkylphenol polyglycol ethers and tristryrylphenol polyglycol ether, and the phosphated or sulphated derivatives thereof. Suitable anionic dispersants are especially lignosulphonates, polyacrylic acid salts and arylsulphonate/formaldehyde condensates.

Antifoams which may be present in the seed dressing formulations usable in accordance with the invention are all foam-inhibiting substances conventionally used for the formulation of active agrochemical ingredients. Silicone antifoams and magnesium stearate can be used with preference.

Preservatives which may be present in the seed dressing formulations usable in accordance with the invention are all substances usable for such purposes in agrochemical compositions. Examples include dichlorophene and benzyl alcohol hemiformal.

Secondary thickeners which may be present in the seed dressing formulations usable in accordance with the invention are all substances usable for such purposes in agrochemical compositions. Preferred examples include cellulose derivatives, acrylic acid derivatives, xanthan, modified clays and finely divided silica.

Adhesives which may be present in the seed dressing formulations usable in accordance with the invention are all customary binders usable in seed dressing products. Preferred examples include polyvinylpyrrolidone, polyvinyl acetate, polyvinyl alcohol and tylose.

The formulations for on-seed applications usable in accordance with the invention can be used to treat a wide variety of different kinds of seed either directly or after prior dilution with water. For instance, the concentrates or the preparations obtainable therefrom by dilution with water can be used to dress the seed of cereals, such as wheat, barley, rye, oats, and triticale, and also seeds of maize, soybean, rice, oilseed rape, peas, beans, cotton, sunflowers, and beets, or else a wide variety of different vegetable seeds. The formulations usable in accordance with the invention, or the dilute preparations thereof, can also be used for seeds of transgenic plants.

For treatment of seeds with the formulations usable in accordance with the invention, or the preparations prepared therefrom by adding water, all mixing units usable customarily for on-seed applications are useful. Specifically, the procedure in on-seed applications is to place the seeds into a mixer, to add the particular desired amount of the formulations, either as such or after prior dilution with water, and to mix everything until all applied formulations are distributed homogeneously on the seeds. If appropriate, this is followed by a drying operation.

In some embodiments, the application methods according to the invention part for the protection of a plant propagation material, which, in accordance with the invention, is any plant material capable of developing complete plants after planting or sowing to the site of planting or sowing, for example seedlings, rhizomes, nursery plants, cuttings or, in particular, seed (seeds), such as fruits, tubers, kernels or bulbs, against attack by pests are characterized in that, for example, suitable compositions are applied in such a manner that they are applied in close spatial proximity to, or spatially together with, planting or sowing the propagation material to the site of planting or sowing. Application of these compositions in close spatial proximity to planting or sowing the propagation material to the site of planting or sowing takes place in accordance with the invention, preferably prior to planting or sowing the propagation material, by applying the compositions by soil application directly to the site where the propagation material has been planted or sown, for example preferably prior to sowing into the seed furrow or to a closely delimited area around the site of planting or sowing the propagation material. Application of such compositions, which takes place spatially together with planting or applying the propagation material to the site of planting or sowing is to be understood as meaning that propagation material which has been pretreated with these compositions is planted or sown at the site of planting or sowing, it being possible, depending on the intended aims and prevailing circumstances, for the pretreatment of the propagation material to be effected for example by spraying, atomizing, dusting or scattering the compositions over the propagation material or brushing or pouring the compositions over the propagation material or, in the event of seed, in particular also by dressing the seed. When carrying out seed dressing, i.e., dry seed, wet seed-dressing, liquid seed-dressing or slurry dressing, the *Bacillus subtilis* QST713, and/or metabolites produced therefrom are added to the seed prior to sowing in a seed-dressing apparatus and the composition is distributed uniformly over the seed, for example by stirring the contents of the seed-dressing apparatus and/or by rotating and/or shaking the entire seed-dressing apparatus. Particular embodiments of such a seed-dressing treatment comprise, for example, immersing the seed in a liquid composition, coating the seed with a solid composition (seed coating) or by achieving penetration of the active ingredient into the seed by adding the composition to the water used for pre-soaking the seed (seed soaking).

The compositions and strains of the present invention can be applied to the seeds using conventional treating techniques and machines, such as fluidized bed techniques, the roller mill method, rotostatic seed treaters, and drum coaters. Other methods, such as spouted beds may also be useful. The seeds may be pre-sized before coating. After coating, the seeds are typically dried and then transferred to a sizing machine for sizing. Such sizing and treating procedures are known in the art.

In one embodiment, the compositions and strains of the present invention can be applied or treated on to the plant propagation material by a method such that the germination is not induced; generally seed soaking induces germination because the moisture content of the resulting seed is too high. Accordingly, examples of suitable methods for applying (or treating) plant propagation material, such as a seed, are seed dressing, seed coating or seed pelleting and the like.

In a typical embodiment, the plant propagation material is seed. Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also be primed according to techniques understood by those skilled in the art either before or after the treatment.

Even distribution of the active ingredients and adherence thereof to the seeds is desired during propagation material treatment. Treatment could vary from a thin film (dressing) of the formulation containing the compositions and strains of the present invention on a plant propagation material, such as a seed, where the original size and/or shape are recognizable to an intermediary state (such as a coating) and then to a thicker film (such as pelleting) with many layers of different materials (such as carriers, for example, clays; different formulations, such as of other active ingredients; polymers; and colorants) where the original shape and/or size of the seed is no longer recognizable.

In some embodiments, the seed treatment occurs to an unsown seed. The term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil, but would include any application practice that would target the seed during the planting process.

In some embodiments, treatment occurs before sowing of the seed so that the sown seed has been pre-treated with the compositions and strains of the present invention. In particular, seed coating or seed pelleting are preferred in the treatment with the compositions and strains described herein. As a result of the treatment, the compositions and strains of the present invention are adhered on to the surface of the seed and therefore available for pest and/or disease control.

The treated seeds can be stored, handled, sowed and tilled in the same manner as any other active ingredient treated seed.

When used as a soil treatment, the compositions of the present invention can be applied as a soil surface drench, shanked-in, injected and/or applied in-furrow or by mixture with irrigation water. The rate of application for drench soil treatments, which may be applied at planting, during or after seeding, or after transplanting and at any stage of plant growth, is about 4 × 10⁷ to about 8 × 10¹⁴ cfu per acre (1.62 × 10⁷to 3.24 × 10¹⁴ cfu per hectare) or about 4 × 10⁹ to about 8 × 10¹³ cfu per acre (1.62 × 10⁹ to 3.24 × 10¹³ cfu per hectare) or about 4 × 10¹¹ to about 8 × 10¹² cfu per acre (1.62 × 10¹¹ to 3.24 × 10¹² cfu per hectare) or about 2 × 10¹² to about 6 × 10¹³ cfu per acre (8.09 × 10¹¹ to 2.43 × 10¹³ cfu per hectare) or about 2 × 10¹² to about 3 × 10¹³ cfu per acre (8.09 × 10¹¹ to 1.21 × 10¹³ cfu per hectare).

In some embodiments, the rate of application is about 1 × 10¹² to about 6 × 10¹² cfu per acre (4.05 × 10¹¹ to 2.43 × 10¹² cfu per hectare) or about 1 × 10¹³ to about 6 × 10¹³ cfu per acre (4.05 × 10¹² to 2.43 ×10¹³ cfu per hectare). The rate of application for in-furrow treatments, applied at planting, is about 2.5 × 10¹⁰ to about 5 × 10¹¹ cfu per 1000 row feet (7.6 × 10⁹ to 1.52 × 10¹¹ cfu per 100 row meter). In some embodiments, the rate of application is about 6 × 10¹⁰ to about 3 × 10¹² cfu per 1000 row feet (1.83 × 10¹⁰ to 9.1 × 10¹¹ cfu per 100 row meter) or about 6 × 10¹⁰ to about 4 × 10¹¹ cfu per 1000 row feet (1.83 × 10¹⁰ to 1.22 × 10¹¹ cfu per 100 row meter) or about 6 × 10¹¹ to about 3 × 10¹² cfu per 1000 row feet (1.83 × 10¹² to 9.1 × 10¹¹ cfu per 100 row meter) or about 6 × 10¹¹ to about 4 × 10¹² cfu per 1000 row feet (1.83 × 10¹¹ to 1.22 × 10¹² cfu per 100 row meter). Those of skill in the art will understand how to adjust rates for broadcast treatments and other less common soil treatments.

The compositions of the present invention can be introduced to the soil before planting or before germination of the seed. The compositions of the present invention can also be introduced to the soil in contact with plant roots, to soil at the base of the plant, or to the soil around the base of the plant (e.g., within a distance of about 5 cm, about 10 cm, about 15 cm, about 20 cm, about 25 cm, about 30 cm, about 35 cm, about 40 cm, about 45 cm, about 50 cm, about 55 cm, about 60 cm, about 65 cm, about 70 cm, about 75 cm, about 80 cm, about 85 cm, about 90 cm, about 95 cm, about 100 cm, or more around or below the base of the plant). The compositions may be applied by utilizing a variety of techniques including, but not limited to, drip irrigation, sprinklers, soil injection or soil drenching.

The compositions may also be applied to soil and/or plants in plug trays or to seedlings prior to transplanting to a different plant locus. When applied to the soil in contact with the plant roots, to the base of the plant, or to the soil within a specific distance around the base of the plant, including as a soil drench treatment, the composition may be applied as a single application or as multiple applications. The compositions may be applied at the rates set forth above for drench treatments or a rate of about 1 × 10⁵ to about 1 × 10⁸ cfu per gram of soil, 1 × 10⁵ to about 1 × 10⁷ cfu per gram of soil, 1 × 10⁵ to about 1 × 10⁶ cfu per gram of soil, 7 × 10⁵ to about 1 × 10⁷ cfu per gram of soil, 1 × 10⁶ to about 5 × 10⁶ cfu per gram of soil, or 1 × 10⁵ to about 3 × 10⁶ cfu per gram of soil. In one embodiment, the compositions of the present invention are applied as a single application at a rate of about 7 × 10⁵ to about 1 × 10⁷ cfu per gram of soil. In another embodiment, the compositions of the present invention are applied as a single application at a rate of about 1 × 10⁶ to about 5 × 10⁶ cfu per gram of soil. In other embodiments, the compositions of the present invention are applied as multiple applications at a rate of about 1 × 10⁵ to about 3 × 10⁶ cfu per gram of soil.

All plants and plant parts can be treated. By plants is meant all plants and plant populations such as desirable and undesirable wild plants, cultivars and plant varieties (whether or not protectable by plant variety or plant breeder's rights). Cultivars and plant varieties can be plants obtained by conventional propagation and breeding methods which can be assisted or supplemented by one or more biotechnological methods such as by use of double haploids, protoplast fusion, random and directed mutagenesis, molecular or genetic markers or by bioengineering and genetic engineering methods. By plant parts is meant all above ground and below ground parts and organs of plants such as shoot, leaf, blossom and root, whereby for example leaves, needles, stems, branches, blossoms, fruiting bodies, fruits and seed as well as roots, corms and rhizomes are listed. Crops and vegetative and generative propagating material, for example cuttings, corms, rhizomes, runners, whole seedlings and seeds also belong to plant parts.

Plants which can be treated in accordance with the invention include the following main crop plants: maize, soya bean, alfalfa, cotton, sunflower, *Brassica* oil seeds such as *Brassica napus* (e.g., canola, rapeseed), *Brassica rapa, B. juncea* (e.g., (field) mustard) and *Brassica carinata, Arecaceae* sp. (e.g., oilpalm, coconut), rice, wheat, sugar beet, sugar cane, oats, rye, barley, millet and sorghum, triticale, flax, nuts, grapes and vine and various fruit and vegetables from various botanic taxa, e.g., *Rosaceae* sp. (e.g., pome fruits such as apples and pears, but also stone fruits such as apricots, cherries, almonds, plums and peaches, and berry fruits such as strawberries, raspberries, red and black currant and gooseberry), *Ribesioidae* sp., *Juglandaceae* sp., *Betulaceae* sp., *Anacardiaceae* sp., *Fagaceae* sp., *Moraceae* sp., *Oleaceae* sp. (e.g., olive tree), *Actinidaceae* sp., *Lauraceae* sp. (e.g., avocado, cinnamon, camphor), *Musaceae* sp. (e.g., banana trees and plantations), *Rubiaceae* sp. (e.g., coffee), *Theaceae* sp. (e.g., tea), *Sterculiceae* sp., *Rutaceae* sp. (e.g., lemons, oranges, mandarins and grapefruit); *Solanaceae* sp. (e.g., tomatoes, potatoes, peppers, capsicum, aubergines, tobacco), *Liliaceae* sp., *Compositae* sp. (e.g., lettuce, artichokes and chicory - including root chicory, endive or common chicory), *Umbelliferae* sp. (e.g., carrots, parsley, celery and celeriac), *Cucurbitaceae* sp. (e.g., cucumbers - including gherkins, pumpkins, watermelons, calabashes and melons), *Alliaceae* sp. (e.g., leeks and onions), *Cruciferae* sp. (e.g., white cabbage, red cabbage, broccoli, cauliflower, Brussels sprouts, pak choi, kohlrabi, radishes, horseradish, cress and chinese cabbage), *Leguminosae* sp. (e.g., peanuts, peas, lentils and beans - e.g., common beans and broad beans), *Chenopodiaceae* sp. (e.g., Swiss chard, fodder beet, spinach, beetroot), *Linaceae* sp. (e.g., hemp), *Cannabeacea* sp. (e.g., cannabis), *Malvaceae* sp. (e.g., okra, cocoa), *Papaveraceae* (e.g., poppy), *Asparagaceae* (e.g., asparagus); useful plants and ornamental plants in the garden and woods including turf, lawn, grass and *Stevia rebaudiana;* and in each case genetically modified types of these plants.

In one embodiment plants to be treated are soybean, corn, cotton, oilseeds, in particular winter or spring oilseed rape, canola, vegetables, in particular those of the *Solanaceae* family like tomatoes, potatoes, peppers, capsicum, aubergines, cucurbits like cucumbers, squashes, melons, pumpkins, tobacco, rice, wheat, in particular spring wheat, winter wheat, Durum, oats, rye, barley, millet and sorghum, triticale, berries, e.g., strawberry, raspberry, blueberry, blackberry, gooseberry, red and black currant; stonefruit e.g., plum, cherry, apricot, peach, nectarine, mango, or other fruit e.g., persimmons.

In another embodiment plants are soybeans, cucurbits like cucumbers, squashes, melons, pumpkins.

Soybean varieties are divided into groups according to their relative times of maturity. An understanding of soybean relative maturity is important for growers to select the varieties best adapted to their production areas. It is best to pick a variety with sufficient maturity to maximize vegetative growth and thus node production prior to entering reproductive stages, however, planting a variety that does not flower soon enough may result in crop losses due to late season dry weather or early frost. (http://igrow.org/news/soybean-physiology-relative-maturity-explained/). Soybean varieties are therefore divided into maturity groups (MG) according to their relative times of maturity. MG are designated using Roman numerals from 0 (very short-season) to X for varieties developed for very warm climates with shorter days during growing season. An additional decimal can be added to denote gradations. The MG is assigned by the breeder and naming systems will include the MG number as part of the name. MG 0 will be planted in northeastern regions of the United States while MG VI is the MG found in the southern soybean growing areas in the U.S. In Brazil due to is geographic position south of the 0 degree latitude MG 9 and 10 are found in the northern provinces of Brazil, while MG 5 to 6 is found around 30 degrees latitude in the southern region of Brazil.

As already mentioned above, it is possible to treat all plants and their parts in accordance with the invention. In a preferred embodiment, wild plant species and plant cultivars, or those obtained by conventional biological breeding methods, such as crossing or protoplast fusion, and also parts thereof, are treated. In a further preferred embodiment, transgenic plants and plant cultivars obtained by genetic engineering methods, if appropriate in combination with conventional methods (Genetically Modified Organisms), and parts thereof are treated. The terms "parts" or "parts of plants" or "plant parts" have been explained above. More preferably, plants of the plant cultivars which are commercially available or are in use are treated in accordance with the invention. Plant cultivars are understood to mean plants which have new properties ("traits") and have been obtained by conventional breeding, by mutagenesis or by recombinant DNA techniques. They can be cultivars, varieties, bio- or genotypes.

The method of treatment according to the invention can be used in the treatment of genetically modified organisms (GMOs), e.g., plants or seeds. Genetically modified plants (or transgenic plants) are plants of which a heterologous gene has been stably integrated into genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example, antisense technology, cosuppression technology, RNA interference - RNAi - technology or microRNA - miRNA - technology). A heterologous gene that is located in the genome is also called a transgene. A transgene that is defined by its particular location in the plant genome is called a transformation or transgenic event. In one embodiment crops are of interest being tolerant to herbicides, e.g., to glyphosate, glufosinate, sulfonylureas, 2,4-D, dicamba.

Plants and plant cultivars which are preferably to be treated according to the invention include all plants which have genetic material which impart particularly advantageous, useful traits to these plants (whether obtained by breeding and/or biotechnological means).

Plants and plant cultivars which are also preferably to be treated according to the invention are resistant against one or more biotic stresses, i.e., said plants show a better defense against animal and microbial pests, such as against nematodes, insects, mites, phytopathogenic fungi, bacteria, viruses and/or viroids.

Plants and plant cultivars which may also be treated according to the invention are those plants which are resistant to one or more abiotic stresses. Abiotic stress conditions may include, for example, drought, heat exposure, osmotic stress, flooding, increased soil salinity, increased mineral exposure, ozone exposure, high light exposure, limited availability of nitrogen nutrients, limited availability of phosphorus nutrients, shade avoidance.

Plants and plant cultivars which may also be treated according to the invention, are those plants characterized by enhanced yield characteristics. Increased yield in said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can furthermore be affected by improved plant architecture (under stress and non-stress conditions), including but not limited to, early flowering, flowering control for hybrid seed production, seedling vigor, plant size, leaf area, Crop growth rate, Net Assimilation rate, Leaf area duration, internode number and distance, root growth, nodulation, nitrogen fixation, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content and composition for example cotton or starch, protein content, oil content and composition, nutritional value, reduction in anti-nutritional compounds, improved processability and better storage stability.

Plants that may be treated according to the invention are hybrid plants that already express the characteristic of heterosis or hybrid vigor which results in generally higher yield, vigor, health and resistance towards biotic and abiotic stresses.

Plants or plant cultivars (obtained by plant biotechnology methods such as genetic engineering) which may be treated according to the invention are herbicide-tolerant plants, i.e., plants made tolerant to one or more given herbicides. Such plants can be obtained either by genetic transformation, or by selection of plants containing a mutation imparting such herbicide tolerance.

Plants or plant cultivars (obtained by plant biotechnology methods such as genetic engineering) which may also be treated according to the invention are insect-resistant transgenic plants, i.e., plants made resistant to attack by certain target insects. Such plants can be obtained by genetic transformation, or by selection of plants containing a mutation imparting such insect resistance.

Plants or plant cultivars (obtained by plant biotechnology methods such as genetic engineering) which may also be treated according to the invention are tolerant to abiotic stresses. Such plants can be obtained by genetic transformation, or by selection of plants containing a mutation imparting such stress resistance.

Plants or plant cultivars (obtained by plant biotechnology methods such as genetic engineering) which may also be treated according to the invention show altered quantity, quality and/or storage-stability of the harvested product and/or altered properties of specific ingredients of the harvested product.

Plants or plant cultivars (that can be obtained by plant biotechnology methods such as genetic engineering) which may also be treated according to the invention are plants, such as cotton plants, with altered fiber characteristics. Such plants can be obtained by genetic transformation, or by selection of plants contain a mutation imparting such altered fiber characteristics.

Plants or plant cultivars (that can be obtained by plant biotechnology methods such as genetic engineering) which may also be treated according to the invention are plants, such as oilseed rape or related *Brassica* plants, with altered oil profile characteristics. Such plants can be obtained by genetic transformation, or by selection of plants contain a mutation imparting such altered oil profile characteristics.

Plants or plant cultivars (that can be obtained by plant biotechnology methods such as genetic engineering) which may also be treated according to the invention are plants, such as oilseed rape or related *Brassica* plants, with altered seed shattering characteristics. Such plants can be obtained by genetic transformation, or by selection of plants contain a mutation imparting such altered seed shattering characteristics and include plants such as oilseed rape plants with delayed or reduced seed shattering.

Plants or plant cultivars (that can be obtained by plant biotechnology methods such as genetic engineering) which may also be treated according to the invention are plants, such as Tobacco plants, with altered post-translational protein modification patterns.

In one embodiment useful transgenic plants which may be treated according to the invention are plants containing transformation events, or a combination of transformation events, and that are listed for example in the databases for various national or regional regulatory agencies including Event 1143-14A (cotton, insect control, not deposited, described in WO 2006/128569); Event 1143-51B (cotton, insect control, not deposited, described in WO 2006/128570); Event 1445 (cotton, herbicide tolerance, not deposited, described in U.S. Patent Application Publication No. 2002/120964 or WO 2002/034946); Event 17053 (rice, herbicide tolerance, deposited as PTA-9843, described in WO 2010/117737); Event 17314 (rice, herbicide tolerance, deposited as PTA-9844, described in WO 2010/117735); Event 281-24-236 (cotton, insect control - herbicide tolerance, deposited as PTA-6233, described in WO 2005/103266 or U.S. Patent Application Publication No. 2005/216969); Event 3006-210-23 (cotton, insect control - herbicide tolerance, deposited as PTA-6233, described in U.S. Patent Application Publication No. 2007/143876 or WO 2005/103266); Event 3272 (corn, quality trait, deposited as PTA-9972, described in WO 2006/098952 or U.S. Patent Application Publication No. 2006/230473); Event 40416 (corn, insect control - herbicide tolerance, deposited as ATCC PTA-11508, described in WO 2011/075593); Event 43A47 (corn, insect control - herbicide tolerance, deposited as ATCC PTA-11509, described in WO 2011/075595); Event 5307 (corn, insect control, deposited as ATCC PTA-9561, described in WO 2010/077816); Event ASR-368 (bent grass, herbicide tolerance, deposited as ATCC PTA-4816, described in U.S. Patent Application Publication No. 2006/162007 or WO 2004/053062); Event B16 (corn, herbicide tolerance, not deposited, described in U.S. Patent Application Publication No. 2003/126634); Event BPS-CV127-9 (soybean, herbicide tolerance, deposited as NCIMB No. 41603, described in WO 2010/080829); Event CE43-67B (cotton, insect control, deposited as DSM ACC2724, described in U.S. Patent Application Publication No. 2009/217423 or WO 2006/128573); Event CE44-69D (cotton, insect control, not deposited, described in U.S. Patent Application Publication No. 2010/0024077); Event CE44-69D (cotton, insect control, not deposited, described in WO 2006/128571); Event CE46-02A (cotton, insect control, not deposited, described in WO 2006/128572); Event COT102 (cotton, insect control, not deposited, described in U.S. Patent Application Publication No. 2006/130175 or WO 2004/039986); Event COT202 (cotton, insect control, not deposited, described in US 2007/067868 or WO 2005/054479); Event COT203 (cotton, insect control, not deposited, described in WO 2005/054480); Event DAS40278 (corn, herbicide tolerance, deposited as ATCC PTA-10244, described in WO 2011/022469); Event DAS-59122-7 (corn, insect control - herbicide tolerance, deposited as ATCC PTA 11384 , described in U.S. Patent Application Publication No. 2006/070139); Event DAS-59132 (corn, insect control - herbicide tolerance, not deposited, described in WO 2009/100188); Event DAS68416 (soybean, herbicide tolerance, deposited as ATCC PTA-10442, described in WO 2011/066384 or WO 2011/066360); Event DP-098140-6 (corn, herbicide tolerance, deposited as ATCC PTA-8296, described in U.S. Patent Application Publication No. 2009/137395 or WO 2008/112019); Event DP-305423-1 (soybean, quality trait, not deposited, described in U.S. Patent Application Publication No. 2008/312082 or WO 2008/054747); Event DP-32138-1 (corn, hybridization system, deposited as ATCC PTA-9158, described in U.S. Patent Application Publication No. 2009/0210970 or WO 2009/103049); Event DP-356043-5 (soybean, herbicide tolerance, deposited as ATCC PTA-8287, described in U.S. Patent Application Publication No. 2010/0184079 or WO 2008/002872); Event EE-1 (brinjal, insect control, not deposited, described in WO 2007/091277); Event FI117 (corn, herbicide tolerance, deposited as ATCC 209031, described in U.S. Patent Application Publication No. 2006/059581 or WO 1998/044140); Event GA21 (corn, herbicide tolerance, deposited as ATCC 209033, described in U.S. Patent Application Publication No. 2005/086719 or WO 1998/044140); Event GG25 (corn, herbicide tolerance, deposited as ATCC 209032, described in U.S. Patent Application Publication No. 2005/188434 or WO 1998/044140); Event GHB119 (cotton, insect control - herbicide tolerance, deposited as ATCC PTA-8398, described in WO 2008/151780); Event GHB614 (cotton, herbicide tolerance, deposited as ATCC PTA-6878, described in U.S. Patent Application Publication No. 2010/050282 or WO 2007/017186); Event GJ11 (corn, herbicide tolerance, deposited as ATCC 209030, described in U.S. Patent Application Publication No. 2005/188434 or WO 1998/044140); Event GM RZ13 (sugar beet, virus resistance , deposited as NCIMB-41601, described in WO 2010/076212); Event H7-1 (sugar beet, herbicide tolerance, deposited as NCIMB 41158 or NCIMB 41159, described in U.S. Patent Application Publication No. 2004/172669 or WO 2004/074492); Event JOPLIN1 (wheat, disease tolerance, not deposited, described in U.S. Patent Application Publication No. 2008/064032); Event LL27 (soybean, herbicide tolerance, deposited as NCIMB41658, described in WO 2006/108674 or U.S. Patent Application Publication No. 2008/320616); Event LL55 (soybean, herbicide tolerance, deposited as NCIMB 41660, described in WO 2006/108675 or U.S. Patent Application Publication No. 2008/196127); Event LLcotton25 (cotton, herbicide tolerance, deposited as ATCC PTA-3343, described in WO 2003/013224 or U.S. Patent Application Publication No. 2003/097687); Event LLRICE06 (rice, herbicide tolerance, deposited as ATCC-23352, described in U.S. Patent No. 6,468,747 or WO 2000/026345); Event LLRICE601 (rice, herbicide tolerance, deposited as ATCC PTA-2600, described in U.S. Patent Application Publication No. 2008/2289060 or WO 2000/026356); Event LY038 (corn, quality trait, deposited as ATCC PTA-5623, described in U.S. Patent Application Publication No. 2007/028322 or WO 2005/061720); Event MIR162 (corn, insect control, deposited as PTA-8166, described in U.S. Patent Application Publication No. 2009/300784 or WO 2007/142840); Event MIR604 (corn, insect control, not deposited, described in U.S. Patent Application Publication No. 2008/167456 or WO 2005103301); Event MON15985 (cotton, insect control, deposited as ATCC PTA-2516, described in U.S. Patent Application Publication No. 2004/250317 or WO 2002/100163); Event MON810 (corn, insect control, not deposited, described in U.S. Patent Application Publication No. 2002/102582); Event MON863 (corn, insect control, deposited as ATCC PTA-2605, described in WO 2004/011601 or U.S. Patent Application Publication No. 2006/095986); Event MON87427 (corn, pollination control, deposited as ATCC PTA-7899, described in WO 2011/062904); Event MON87460 (corn, stress tolerance, deposited as ATCC PTA-8910, described in WO 2009/111263 or U.S. Patent Application Publication No. 2011/0138504); Event MON87701 (soybean, insect control, deposited as ATCC PTA-8194, described in U.S. Patent Application Publication No. 2009/130071 or WO 2009/064652); Event MON87705 (soybean, quality trait - herbicide tolerance, deposited as ATCC PTA-9241, described in U.S. Patent Application Publication No. 2010/080887 or WO 2010/037016); Event MON87708 (soybean, herbicide tolerance, deposited as ATCC PTA9670, described in WO 2011/034704); Event MON87754 (soybean, quality trait, deposited as ATCC PTA-9385, described in WO 2010/024976); Event MON87769 (soybean, quality trait, deposited as ATCC PTA-8911, described in U.S. Patent Application Publication No. 2011/0067141 or WO 2009/102873); Event MON88017 (corn, insect control - herbicide tolerance, deposited as ATCC PTA-5582, described in U.S. Patent Application Publication No. 2008/028482 or WO 2005/059103); Event MON88913 (cotton, herbicide tolerance, deposited as ATCC PTA-4854, described in WO 2004/072235 or U.S. Patent Application Publication No. 2006/059590); Event MON89034 (corn, insect control, deposited as ATCC PTA-7455, described in WO 2007/140256 or U.S. Patent Application Publication No. 2008/260932); Event MON89788 (soybean, herbicide tolerance, deposited as ATCC PTA-6708, described in U.S. Patent Application Publication No. 2006/282915 or WO 2006/130436); Event MS11 (oilseed rape, pollination control - herbicide tolerance, deposited as ATCC PTA-850 or PTA-2485, described in WO 2001/031042); Event MS8, (oilseed rape, pollination control - herbicide tolerance, deposited as ATCC PTA-730, described in WO 2001/041558 or U.S. Patent Application Publication No. 2003/188347); Event NK603 (corn, herbicide tolerance, deposited as ATCC PTA-2478, described in U.S. Patent Application Publication No. 2007/292854); Event PE-7 (rice, insect control, not deposited, described in WO2008/114282); Event RF3, (oilseed rape, pollination control - herbicide tolerance, deposited as ATCC PTA-730, described in WO 2001/041558 or U.S. Patent Application Publication No. 2003/188347); Event RT73 (oilseed rape, herbicide tolerance, not deposited, described in WO 2002/036831 or U.S. Patent Application Publication No. 2008/070260); Event T227-1 (sugar beet, herbicide tolerance, not deposited, described in WO 2002/44407 or U.S. Patent Application Publication No. 2009/265817); Event T25 (corn, herbicide tolerance, not deposited, described in U.S. Patent Application Publication No. 2001/029014 or WO 2001/051654); Event T304-40 (cotton, insect control - herbicide tolerance, deposited as ATCC PTA-8171, described in U.S. Patent Application Publication No. 2010/077501 or WO 2008/122406); Event T342-142 (cotton, insect control, not deposited, described in WO 2006/128568); Event TC1507 (corn, insect control - herbicide tolerance, not deposited, described in U.S. Patent Application Publication No. 2005/039226 or WO 2004/099447); Event VIP1034 (corn, insect control - herbicide tolerance, deposited as ATCC PTA-3925, described in WO 2003/052073), Event 32316 (corn, insect control-herbicide tolerance, deposited as PTA-11507, described in WO 2011/153186A1), Event 4114 (corn, insect control-herbicide tolerance, deposited as PTA-11506, described in WO 2011/084621), event EE-GM3 / FG72 (soybean, herbicide tolerance, ATCC Accession No. PTA-11041, WO 2011/063413 A2), event DAS-68416-4 (soybean, herbicide tolerance, ATCC Accession No. PTA-10442, WO 2011/066360A1), event DAS-68416-4 (soybean, herbicide tolerance, ATCC Accession No. PTA-10442, WO 2011/066384 A1), event DP-040416-8 (corn, insect control, ATCC Accession No. PTA-11508, WO 2011/075593 A1), event DP-043A47-3 (corn, insect control, ATCC Accession No. PTA-11509, WO 2011/075595 A1), event DP-004114-3 (corn, insect control, ATCC Accession No. PTA-11506, WO 2011/084621 A1), event DP-032316-8 (corn, insect control, ATCC Accession No. PTA-11507, WO 2011/084632 A1), event MON-88302-9 (oilseed rape, herbicide tolerance, ATCC Accession No. PTA-10955, WO 2011/153186A1), event DAS-21606-3 (soybean, herbicide tolerance, ATCC Accession No. PTA-11028, WO 2012/033794A2), event MON-87712-4 (soybean, quality trait, ATCC Accession No. PTA-10296, WO 2012/051199A2), event DAS-44406-6 (soybean, stacked herbicide tolerance, ATCC Accession No. PTA-11336, WO 2012/075426A1), event DAS-14536-7 (soybean, stacked herbicide tolerance, ATCC Accession No. PTA-11335, WO 2012/075429A1), event SYN-000H2-5 (soybean, herbicide tolerance, ATCC Accession No. PTA-11226, WO 2012/082548A2), event DP-061061-7 (oilseed rape, herbicide tolerance, no deposit number available, WO 2012071039A1), event DP-073496-4 (oilseed rape, herbicide tolerance, no deposit number available, U.S. Patent Application Publication No. 2012/131692), event 8264.44.06.1 (soybean, stacked herbicide tolerance, Accession No. PTA-11336, WO2012075426A2), event 8291.45.36.2 (soybean, stacked herbicide tolerance, Accession No. PTA-11335, WO 2012/075429A2).

The present invention describes the use of *Bacillus subtilis* QST713, *Bacillus subtilis* var. *amyloliquefaciens* FZB24, and/or a mutant thereof for improving tolerance in a plant exposed to cold stress.

According to some embodiments, the invention describes the use of *Bacillus subtilis* QST713, *Bacillus subtilis* var. *amyloliquefaciens* FZB24, and/or a mutant thereof for improving tolerance in a canola plant exposed to cold stress.

According to some embodiments, the invention describes the use of *Bacillus subtilis* QST713, *Bacillus subtilis* var. *amyloliquefaciens* FZB24, and/or a mutant thereof for improving tolerance in a corn plant exposed to cold stress.

According to some embodiments, the invention describes the use of *Bacillus subtilis* QST713, *Bacillus subtilis* var. *amyloliquefaciens* FZB24, and/or a mutant thereof for improving tolerance in a canola or a corn seed exposed to cold stress.

According to some embodiments, the invention describes the use of *Bacillus subtilis* QST713, *Bacillus subtilis* var. *amyloliquefaciens* FZB24, and/or a mutant thereof for improving tolerance in a canola plant exposed to cold stress, whereby the seed is treated with the *Bacillus subtilis* QST713, *Bacillus subtilis* var. *amyloliquefaciens* FZB24, and/or a mutant thereof before sowing. The seed may be coated with the treatment.

According to some embodiments, the invention describes the use of *Bacillus subtilis* QST713, *Bacillus subtilis* var. *amyloliquefaciens* FZB24, and/or a mutant thereof for improving tolerance in a canola plant exposed to cold stress, whereby the seed is treated with the *Bacillus subtilis* QST713, *Bacillus subtilis* var. *amyloliquefaciens* FZB24, and/or a mutant thereof after sowing by treating the soil where the seed is sown. The treatment of the soil may be effected by drenching the soil.

According to some embodiments, the invention describes the use of *Bacillus subtilis* QST713, *Bacillus subtilis* var. *amyloliquefaciens* FZB24, and/or a mutant thereof for improving tolerance in a canola or a corn plant exposed to a cold stress during 3 to 14 days.

According to some embodiments, the invention describes the use of *Bacillus subtilis* QST713, *Bacillus subtilis* var. *amyloliquefaciens* FZB24, and/or a mutant thereof for improving tolerance in a canola or a corn plant exposed to a cold stress during at least 7 days.

According to some embodiments, the invention describes the use of *Bacillus subtilis* QST713, *Bacillus subtilis* var. *amyloliquefaciens* FZB24, and/or a mutant thereof for improving tolerance in a canola or a corn plant exposed to a cold stress during at least 10 days.

According to some embodiments, the invention describes the use of *Bacillus subtilis* QST713, *Bacillus subtilis* var. *amyloliquefaciens* FZB24, and/or a mutant thereof for improving tolerance in a canola or a corn plant exposed to a cold stress during at least 14 days.

According to some embodiments, the invention describes the use of *Bacillus subtilis* QST713, *Bacillus subtilis* var. *amyloliquefaciens* FZB24, and/or a mutant thereof for improving tolerance in a canola or a corn plant exposed to a cold stress between 0°C and 10°C.

According to some embodiments, the invention describes the use of *Bacillus subtilis* QST713, *Bacillus subtilis* var. *amyloliquefaciens* FZB24, and/or a mutant thereof for improving tolerance in a canola or a corn plant exposed to a cold stress below 10°C.

According to some embodiments, the invention describes the use of *Bacillus subtilis* QST713, *Bacillus subtilis* var. *amyloliquefaciens* FZB24, and/or a mutant thereof for improving tolerance in a canola or a corn plant exposed to a cold stress of about 5°C.

According to some embodiments, the invention describes the use of *Bacillus subtilis* QST713, *Bacillus subtilis* var. *amyloliquefaciens* FZB24, and/or a mutant thereof for improving tolerance in a canola or a corn plant exposed to a cold stress of about 0°C.

According to some embodiments, the invention describes the use of *Bacillus subtilis* QST713, and/or a mutant thereof for improving tolerance in a canola plant exposed to a cold stress, whereby the canola seed is treated with a dose of *Bacillus subtilis* QST713, and/or a mutant thereof of at least 1 × 10⁷ CFU per seed. According to another embodiment, the canola seed is treated with a dose of *Bacillus subtilis* QST713, and/or a mutant thereof between 1 × 10⁷ CFU per seed and 1 × 10⁸ CFU per seed.

In yet other aspects, the present invention provides the use of *Bacillus subtilis* QST713 and/or a mutant thereof for improving crop safety in a plant.

According to some embodiments, the present invention provides the use of *Bacillus subtilis* QST713 and/or a mutant thereof for improving seed crop safety in a plant.

According to some embodiments, the present invention provides the use of *Bacillus subtilis* QST713 and/or a mutant thereof for improving crop safety in a canola or corn plant. According to some embodiments, the present invention provides the use of *Bacillus subtilis* QST713 and/or a mutant thereof for improving crop safety in a canola plant.

According to some embodiments, the crop safety improvement is an improvement of the seed germination of the canola seeds. According to another embodiment, the crop safety improvement is an improvement of the delay of emergence of the growing plantlets. According to another embodiment, the crop safety improvement is an improvement of the stand density of the crop. According to another embodiment, the crop safety improvement is an improvement of vigor of the plant. According to another embodiment, the crop safety improvement is an improvement of the yield of the crop. Crop safety is the capacity of the plant to stand safe or safer when treated with an active compound affecting its safety. Accordingly, these crop safety improvements are improvements in situations where the crop is treated with an active compound affecting crop safety.

According to some embodiments, the present invention provides the use of *Bacillus subtilis* QST713 and/or a mutant thereof for improving crop safety in a canola or a corn plant, whereby the seed of the canola or corn plant is treated with a dose of *Bacillus subtilis* QST713, and/or a mutant thereof between 1 × 10⁶ CFU per seed and 1 × 10⁸ CFU per seed. In some embodiments, the canola or corn seed is treated with a dose of 1 × 10⁶ CFU per seed.

According to some embodiments, the present invention provides the use of *Bacillus subtilis* QST713 and/or a mutant thereof for improving crop safety in a canola plant treated with the insecticide, flupyradifurone (FPF).

According to some embodiments, the present invention provides the use of *Bacillus subtilis* QST713 and/or a mutant thereof for improving the safety of canola seeds treated with the insecticide, flupyradifurone (FPF), whereby the canola or corn seed is treated with a dose of 1 × 10⁶ CFU per seed.

The following examples are given for purely illustrative and non-limiting purposes of the present invention.

### EXAMPLES

### Example 1. Growth of Bacillus Strains at Cold Temperatures

The growth of *Bacillus subtilis* QST713 (i.e. the active agent in SERENADE^{®} ASO), *Bacillus subtilis* var. *amyloliquefaciens* strain FZB24 (i.e., the active agent in TAEGRO^{®} ECO), *Bacillus subtilis* strain MBI 600 (i.e., the active agent in INTEGRAL^{®}), and *Bacillus amyloliquefaciens* strain ABC was evaluated after a 24-hour period of cold stress at 10°C, 11°C, 12°C, 13°C, 14°C, 15°C, 16°C, 17°C, 18°C, 19°C, or 20°C followed by a 24-hour period of recovery at room temperature. 100 µL of each strain at an average concentration of 1 × 10¹⁰ CFU/mL were spread on the agar plates. The growth of each strain under these conditions was photographed and is presented in **FIGs. 1A** and **1B** and **Tables 1** and **2**, respectively, below. *Bacillus subtilis* QST713 had the most robust growth after cold stress at these temperatures followed by *Bacillus subtilis* var. *amyloliquefaciens* strain FZB24.

**Table 1**

| | **10°C** | **11°C** | **12°C** | **13°C** | **14°C** | **15°C** |
|---|---|---|---|---|---|---|
| **QST713** | Growth | Growth | Growth | Growth | Growth | Growth |
| **FZB24** | Growth | Growth | Growth | Growth | Growth | Growth |
| **MBI600** | Growth | Growth | Growth | Growth | Growth | Growth |
| **ABC** | No Growth | No Growth | No Growth | No Growth | No Growth | No Growth |

**Table 2**

| | **16°C** | **17°C** | **18°C** | **19°C** | **20°C** |
|---|---|---|---|---|---|
| **QST713** | Growth | Growth | Growth | Growth | Growth |
| **FZB24** | Growth | Growth | Growth | Growth | Growth |
| **MBI600** | Growth | Growth | Growth | Growth | Growth |
| **ABC** | No Growth | No Growth | Growth | Growth | Growth |

The strains with the same application rates were then evaluated for growth on agar plates under continuous cold stress at 8°C for 2 days, 5 days, or 20 days. Under this more severe cold stress, *Bacillus subtilis* QST713 was the only strain that grew after 5 days (see **FIG. 2A** and **Table 3** below). A magnified image of the agar plate with *Bacillus subtilis* QST713 colonies growing after 5 days at 8°C is shown in **FIG. 2B****.** After 20 days at 8°C, both *Bacillus subtilis* QST713 and *Bacillus subtilis* var. *amyloliquefaciens* strain FZB24 had developed colonies (see **FIG. 2A** and **Table 3** below). The results in these experiments consistently demonstrated that *Bacillus subtilis* QST713 showed the most robust growth under cold stress followed by *Bacillus subtilis* var. *amyloliquefaciens* strain FZB24.

**Table 3**

| | ***Bacillus* Growth at 8°C** | | |
|---|---|---|---|
| | **2 Days** | **5 Days** | **20 Days** |
| **QST713** | No growth | Growth | Growth |
| **FZB24** | No growth | No growth | Growth |
| **MBI600** | No Growth | No Growth | No Growth |
| **ABC** | No Growth | No Growth | No Growth |

### Example 2. Treatment with Bacillus subtilis QST713 Improves Germination and Growth of Cold Stressed Canola Seedlings

Canola seeds were planted in soil and treated with 10% *Bacillus subtilis* QST713 (i.e., 1 × 10⁸ colony forming units (CFU) per seed), 1% *Bacillus subtilis* QST713 (i.e., 1 × 10⁷ CFU per seed), or left untreated (i.e., "Control"). The planted canola seeds were maintained at 4°C for 14 days in the dark in a growth chamber to impose cold stress. At the end of the cold stress, the average percent seed germination for each treatment group (n=120) was assessed at pre-recovery. The plants were transferred to a growth chamber with 14-hour light periods at a temperature of 28°C followed by 10-hour dark periods at 18°C to recover for 3 days from the cold stress. On day 4, the average percent germination for each treatment group (n=120) at recovery was determined. The results presented in **FIG. 3** demonstrate that the canola seeds treated with 10% *Bacillus subtilis* QST713 (i.e., 1 × 10⁸ CFU per seed) had the highest post-recovery germination and the greatest increase in germination of 60% between the pre- and post-recovery assessments.

At 21 days after planting, the average canola seedling leaf area was determined for each group (n=120). Cold stressed canola seedlings treated with 10% *Bacillus subtilis* QST713 (i.e., 1 × 10⁸ CFU per seed) had the greatest average canola seedling leaf area with an increase of about 13% over the control seedlings (see **FIG. 4**).

At 28 days after planting, the average canola seedling fresh and dry weights were determined for each group (n=120). Similar to other early vigor promotion effects, canola seedlings treated with 10% *Bacillus subtilis* QST713 (i.e., 1 × 10⁸ CFU per seed) had the greatest fresh and dry weights (see **FIG. 5**) with a 65% increase in fresh weight and a 12% increase in dry weight compared to control. Treatment with 1% *Bacillus subtilis* QST713 (i.e., 1 × 10⁷ CFU per seed) also resulted in a substantial increase in the canola seedling fresh weights compared to untreated control.

### Example 3. Improved Seedling Vigor, Plant Growth, and Chlorophyll Content after Cold Stress in Corn Treated with Bacillus subtilis QST713

Corn hybrid seeds were planted in cold saturated soil at 5°C and covered with a layer of soil using a modified Iowa Cold test protocol. A fermentation product made by culturing *Bacillus subtilis* QST713 in a soy-based medium was applied as a 10% (v/v) dilution in water. Individual treatments were applied as drenches on soil at planting. At 5°C no seed germination was observed 7 days after planting (DAP). The temperature in the chamber was increased to 25°C at 7 DAP, and the corn seedlings were evaluated at 14 DAP for seedling vigor.

Sixty planted seedlings were evaluated per treatment group. Seedling vigor was rated according to the following criteria:
Low Rating:
   1) First leaf still in a whorl (no fully expanded leaf); and
   2) Shoot length <1.5 inches.
Medium Rating:
   1) Partially expanded first leaf; and
   2) Shoot length is between 1.5 inches- 3 inches.
High Rating:
   1) Fully expanded first leaf;
   2) Partially expanded second leaf; and
   3) Shoot length is above 3 inches.

The seedling vigor ratings presented in **FIG. 6** indicate that cold stressed corn seedlings treated with *Bacillus subtilis* QST713 had a greater proportion of seedlings with medium and high ratings than did the untreated control cold stressed seedlings. A certain percentage of corn seeds failed to germinate and could not be rated for vigor accounting for the portion of the bars in **FIG. 6** that are not rated as low, medium or high.

Chlorophyll and anthocyanin levels were measured in leaves from the corn seedlings at 14 DAP using a DUALEX SCIENTIFIC+^{™} instrument (Dynamax Inc., Houston, Texas). Anthocyanin content is generally higher in young leaves with low photosynthetic rates (Sims, D.A. & Gamon, J.A., "Relationships between leaf pigment content and spectral reflectance across a wide range of species, leaf structures and developmental stages," Remote Sensing of Environment 81 (2002) 337- 354). Thus, higher ratios of chlorophyll to anthocyanin in the leaves of corn seedlings indicate greater photosynthetic activity in the leaves. Chlorophyll to anthocyanin ratios in the group of cold stressed corn seedlings treated with *Bacillus subtilis* QST713 were significantly higher than those of the untreated control group (see **FIG. 7**).

The cold stressed corn seedlings continued to grow at 25°C until 22 DAP when they were evaluated for plant height (cm) and plant biomass (g). 50 seedlings were measured in each treatment group. Cold stressed corn seedlings treated with *Bacillus subtilis* QST713 had greater heights and biomasses than did the untreated control seedlings (see **FIG. 8**).

### Example 4. Enhanced Crop Safety with Canola Treated with Combinations of Flupyradifurone and Bacillus subtilis QST713

Treatment of seeds with certain chemical fungicides and insecticides may decrease the germination efficiency of the seeds. See, e.g., WO 2012/120105. Agents that preserve the germination efficiency of such treated seeds provide a safening effect. About 50 different microbial strains were screened for their ability to provide a safening effect with canola seeds treated with the insecticide, flupyradifurone (FPF).

To conduct the screening assay the canola seeds were treated with FPF alone or in combination with a microbial strain. Untreated control seeds (i.e., "Control"), seeds treated with PROSPER^{®} EVERGOL (clothianidin, penflufen, trifloxystrobin, and metalaxyl), and seeds treated with FPF and JUMPSTART^{®} (*Penicillium bilaiae*) were included for comparison. All seeds were allowed to germinate in dampened blotter paper, and germination rates were determined 7 days after the seeds were placed on the paper.

From among the about 50 microbial strains that were screened, only 21 showed a safening effect on germination with canola seeds treated with FPF. Among the 21 positive leads from the screen there were many *Bacillus* sp. strains (see **FIG. 9**). Surprisingly, *Bacillus subtilis* QST713 not only provided a safening effect but was one of the few strains that enhanced germination efficiency beyond that of the untreated control seed.

To further investigate the safening effect of *Bacillus subtilis* QST713, canola was treated with 5 mg of FPF per seed alone or in combination with 1 × 10⁶ CFU *Bacillus subtilis* QST713 per seed. Untreated control seeds, seeds treated with FPF and one of two different *Bacillus* strains, and seeds treated with PROSPER^{®} EVERGOL (clothianidin, penflufen, trifloxystrobin, and metalaxyl) were included in the analysis for comparison. All seeds were planted in field soil and watered with subirrigation in a growth chamber. 7 days after planting the average percent germination of each group (n=10) was determined. Among the microbial strains tested, *Bacillus subtilis* QST713 had the strongest safening effect and again increased the germination efficiency above that observed with untreated control seeds (see **FIG. 10**).

### Example 5. Canola Field Trials with Application of Flupyradifurone Alone or in Combination with Bacillus subtilis QST713

Five independent field trials with varying degrees of pest pressure from flea beetles were conducted with canola seeds treated with PROSPER^{®} EVERGOL (clothianidin, penflufen, trifloxystrobin, and metalaxyl), FPF alone at two different rates, or FPF at these rates in combination with *Bacillus subtilis* QST713. In one trial there was a significant delay in emergence in plants treated with FPF compared to plants treated with PROSPER^{®} EVERGOL (clothianidin, penflufen, trifloxystrobin, and metalaxyl) (i.e., the "standard" treatment). Addition of *Bacillus subtilis* QST713 to the FPF seed treatments helped reverse this delay on emergence (see **Table 4**).

**Table 4. Delay in Emergence in Canola Treated with FPF Alone or in Combination with Bacillus subtilis QST713**

| **Seed Treatment** | **Relative Delay in Emergence (Days)** |
|---|---|
| PROSPER^{®} EVERGOL | 0.0 |
| Flupyradifurone (5 g per kg seed) | 2.0 |
| Flupyradifurone (5 g per kg seed) + *B. subtilis* QST713 (1 × 10⁶ CFU per seed) | 1.3 |
| Flupyradifurone (10 g per kg seed) | 3.5 |
| Flupyradifurone (5 g per kg seed) + *B. subtilis* QST713 (1 × 10⁶ CFU per seed) | 2.3 |

Stand density was evaluated 2 to 5 days after emergence in each of the field trials. Average stand density was determined relative to the PROSPER^{®} EVERGOL standard. The average relative stand density was decreased in plants treated with FPF alone, and this negative effect was partially mitigated by the addition of *Bacillus subtilis* QST713 (see **Table 5**).

**Table 5. Average Relative Stand Density from Canola Grown in Five Field Trials**

| **Seed Treatment** | **Average Relative Stand Density** |
|---|---|
| PROSPER^{®} EVERGOL | 100.0% |
| Flupyradifurone (5 g per kg seed) | 92.2% |
| Flupyradifurone (5 g per kg seed) + *B. subtilis* QST713 (1 × 10⁶ CFU per seed) | 96.2% |
| Flupyradifurone (10 g per kg seed) | 83.2% |
| Flupyradifurone (5 g per kg seed) + *B. subtilis* QST713 (1 × 10⁶ CFU per seed) | 85.4% |

A representative image of plots of canola 18 days after emergence shows plants treated with 10 grams of FPF per kg seed alone or in combination with *Bacillus subtilis* QST713 at 1 × 10⁶ CFU per seed is presented in **FIG. 11**. In the field trial shown in this figure, the seeds were sown when the ambient temperature was around 10°C resulting in cold stress. The increased growth of the canola plants treated with both FPF and *Bacillus subtilis* QST713 evident in **FIG. 11** likely resulted from the enhanced germination efficiency and the cold stress tolerance induced by the *Bacillus subtilis* QST713.

At 21 to 32 days after emergence, the vigor of the canola plants was rated in each of the five field trials. Vigor was rated according to the following scale:

### 1-6 Vigor Scale: Based upon overall plot fullness, uniformity, growth, and color

1 = Excellent; Significant increase in vigor over normal
2 = Very Good; Marked increase in vigor over normal
3 = Good; Noticeable increase in vigor over normal
4 = Normal; Vigor equal to the market standard
5 = Marginally unacceptable; Marked reduction in vigor
6 = Poor; Significant reduction in vigor (unmarketable)

The average vigor ratings shown in **Table 6** show that application of *Bacillus subtilis* QST713 consistently improved the vigor of the canola plants treated with FPF.

**Table 6. Average Vigor Rating from Canola Grown in Five Field Trials**

| **Seed Treatment** | **Average Vigor Rating** |
|---|---|
| PROSPER^{®} EVERGOL | 4.0 |
| Flupyradifurone (5 g per kg seed) | 3.6 |
| Flupyradifurone (5 g per kg seed) + *B. subtilis* QST713 (1 × 10⁶ CFU per seed) | 3.4 |
| Flupyradifurone (10 g per kg seed) | 4.2 |
| Flupyradifurone (5 g per kg seed) + *B. subtilis* QST713 (1 × 10⁶ CFU per seed) | 3.8 |

When the plants reached maturity, the canola from each treatment group was harvested and the total yields were determined. The relative yields were determined relative to canola plants treated with the PROSPER^{®} EVERGOL standard. The results shown in **Table 7** suggest a trend with the *Bacillus subtilis* QST713 increasing the yield from the canola plants treated with FPF.

**Table 7. Average Relative Yield from Canola Grown in Five Field Trials**

| **Seed Treatment** | **Average Relative Yield** |
|---|---|
| PROSPER^{®} EVERGOL | 100.0% |
| Flupyradifurone (5 g per kg seed) | 102.0% |
| Flupyradifurone (5 g per kg seed) + *B. subtilis* QST713 (1 × 10⁶ CFU per seed) | 103.9% |
| Flupyradifurone (10 g per kg seed) | 100.5% |
| Flupyradifurone (5 g per kg seed) + *B. subtilis* QST713 (1 × 10⁶ CFU per seed) | 100.7% |

Unless defined otherwise, all technical and scientific terms herein have the same meaning as commonly understood by one of ordinary skill in the art to which this invention belongs.

## Claims

1. Use of *Bacillus subtilis* strain QST713, for improving tolerance in a plant exposed to cold stress.

2. Use according to Claim 1, wherein the improved tolerance is selected from the group consisting of a) an increase in germination after cold stress; b) an increase in cotyledon, unifoliate, and/or trifoliate leaf area after cold stress; c) an increase in plant fresh weight and/or dry weight after cold stress; d) an increase in plant height after cold stress; e) an improved plant vigor after cold stress; and f) an increase in chlorophyll production after cold stress.

3. Use according to Claim 1 or 2, wherein the *Bacillus subtilis* QST713 is applied to the plant, to a part of the plant and/or to a locus of the plant, where the plant has grown, is growing or is intended to grow.

4. Use according to any one of Claims 1 to 3, wherein the *Bacillus subtilis* QST713 is applied as an in-furrow treatment.

5. Use according to any one of Claims 1 to 3, wherein the *Bacillus subtilis* QST713 is applied as seed treatment.

6. Use according to any one of Claims 1 to 3, and 5, wherein the *Bacillus subtilis* QST713 is applied at an application rate of about 1 × 10² colony forming units (CFU) per seed to about 1 × 10⁹ CFU per seed.

7. Use according to Claim 6, wherein the *Bacillus subtilis* QST713 is applied at an application rate of about 1 × 10⁴ colony forming units (CFU) per seed to about 1 × 10⁷ CFU per seed.

8. Use according to any one of Claims 1 to 7, wherein the cold stress comprises exposure to temperatures below about 10°C.

9. Use according to any one of Claims 1 to 8, wherein the plant is selected from the group consisting of soybean, corn, wheat, triticale, barley, oat, rye, rape, millet, rice, sunflower, cotton, sugar beet, pome fruit, stone fruit, citrus, banana, strawberry, blueberry, almond, grape, mango, papaya, peanut, potato, tomato, pepper, cucurbit, cucumber, melon, watermelon, garlic, onion, broccoli, carrot, cabbage, bean, dry bean, canola, pea, lentil, alfalfa, trefoil, clover, flax, elephant grass, grass, lettuce, sugarcane, tea, tobacco and coffee; each in its natural or genetically modified form.

10. A method for treating a plant in need of improving tolerance to cold stress, the method comprising applying *Bacillus subtilis* QST713 to the plant, to a part of the plant and/or to a locus of the plant in an effective amount to improve tolerance to cold stress.

11. The method according to Claim 10, wherein the improved tolerance is selected from the group consisting of a) an increase in germination after cold stress; b) an increase in cotyledon, unifoliate, and/or trifoliate leaf area after cold stress; c) an increase in plant fresh weight and/or dry weight after cold stress; d) an increase in plant height after cold stress; e) an improved plant vigor after cold stress; and f) an increase in chlorophyll production after cold stress.

12. The method according to Claim 10 or 11, wherein the *Bacillus subtilis* QST713 is applied as an in-furrow treatment and/or a seed treatment.

13. The method according to any one of Claims 10 to 12, wherein the *Bacillus subtilis* QST713 is applied at an application rate of about 1 × 10² colony forming units (CFU) per seed to about 1 × 10⁹ CFU per seed.

14. The method according to Claim 13, wherein the *Bacillus subtilis* QST713 is applied at an application rate of about 1 × 10⁴ colony forming units (CFU) per seed to about 1 × 10⁷ CFU per seed.

15. The method according to any one of Claims 10 to 14, wherein the cold stress comprises exposure to temperatures below about 10°C.

16. The method according to any one of Claims 10 to 15, wherein the plant is selected from the group consisting of soybean, corn, wheat, triticale, barley, oat, rye, rape, millet, rice, sunflower, cotton, sugar beet, pome fruit, stone fruit, citrus, banana, strawberry, blueberry, almond, grape, mango, papaya, peanut, potato, tomato, pepper, cucurbit, cucumber, melon, watermelon, garlic, onion, broccoli, carrot, cabbage, bean, dry bean, canola, pea, lentil, alfalfa, trefoil, clover, flax, elephant grass, grass, lettuce, sugarcane, tea, tobacco and coffee; each in its natural or genetically modified form.

## Patentansprüche

1. Verwendung von *Bacillus subtilis* QST713 zur Verbesserung der Toleranz einer Pflanze, die Kältestress ausgesetzt ist.

2. Verwendung nach Anspruch 1, wobei die verbesserte Toleranz ausgewählt ist aus der Gruppe bestehend aus
a) einer Zunahme der Keimung nach Kältestress;
b) einer Zunahme der Fläche des Keimblatts, des einblättrigen und/oder des dreiblättrigen Blatts nach Kältestress;
c) einer Zunahme des Frischgewichts und/oder des Trockengewichts der Pflanze nach Kältestress;
d) einer Zunahme der Pflanzenhöhe nach Kältestress;
e) einer verbesserten Pflanzenvitalität nach Kältestress; und
f) einer Zunahme der Chlorophyllproduktion nach Kältestress.

3. Verwendung nach Anspruch 1 oder 2, wobei *Bacillus subtilis* QST713 auf die Pflanze, einen Teil der Pflanze und/oder einen Ort der Pflanze angewendet wird, an dem die Pflanze gewachsen ist, wächst oder zu wachsen beabsichtigt ist.

4. Verwendung nach einem der Ansprüche 1 bis 3, wobei *Bacillus subtilis* QST713 als Furchenbehandlung angewendet wird.

5. Verwendung nach einem der Ansprüche 1 bis 3, wobei *Bacillus subtilis* QST713 als Saatgutbehandlung angewendet wird.

6. Verwendung nach einem der Ansprüche 1 bis 3 und 5, wobei *Bacillus subtilis* QST713 mit einer Anwendungsrate von etwa 1 × 10² koloniebildenden Einheiten (KBE) pro Samen bis etwa 1 × 10⁹ KBE pro Samen angewendet wird.

7. Verwendung nach Anspruch 6, wobei *Bacillus subtilis* QST713 mit einer Anwendungsrate von etwa 1 × 10⁴ KBE pro Samen bis etwa 1 × 10⁷ KBE pro Samen angewendet wird.

8. Verwendung nach einem der Ansprüche 1 bis 7, wobei der Kältestress das Aussetzen gegenüber Temperaturen unter etwa 10°C umfasst.

9. Verwendung nach einem der Ansprüche 1 bis 8, wobei die Pflanze ausgewählt ist aus der Gruppe bestehend aus Sojabohne, Mais, Weizen, Triticale, Gerste, Hafer, Roggen, Raps, Hirse, Reis, Sonnenblume, Baumwolle, Zuckerrübe, Kernobst, Steinobst, Zitrusfrüchte, Banane, Erdbeere, Heidelbeere, Mandel, Traube, Mango, Papaya, Erdnuss, Kartoffel, Tomate, Paprika, Gurke, Melone, Wassermelone, Knoblauch, Zwiebel, Brokkoli, Karotte, Kohl, Bohne, Trockenbohne, Erbse, Linse, Luzerne, Klee, Flachs, Elefantengras, Gras, Salat, Zuckerrohr, Tee, Tabak und Kaffee; jeweils in ihrer natürlichen oder gentechnisch veränderten Form.

10. Verfahren zur Behandlung einer Pflanze, die eine Verbesserung der Toleranz gegenüber Kältestress benötigt, wobei das Verfahren das Aufbringen von *Bacillus subtilis* QST713 auf die Pflanze, auf einen Teil der Pflanze und/oder auf einen Ort der Pflanze in einer wirksamen Menge umfasst, um die Toleranz gegenüber Kältestress zu verbessern.

11. Verfahren nach Anspruch 10, wobei die verbesserte Toleranz ausgewählt ist aus der Gruppe bestehend aus
a) einer Zunahme der Keimung nach Kältestress;
b) einer Zunahme der Keimblatt-, einblättrigen und/oder dreiblättrigen Blattfläche nach Kältestress;
c) einer Zunahme des Frischgewichts und/oder des Trockengewichts der Pflanze nach Kältestress;
d) einer Zunahme der Pflanzenhöhe nach Kältestress;
e) einer verbesserten Pflanzenvitalität nach Kältestress; und
f) einer Zunahme der Chlorophyllproduktion nach Kältestress.

12. Verfahren nach Anspruch 10 oder 11, wobei *Bacillus subtilis* QST713 als Furchenbehandlung und/oder Saatgutbehandlung angewendet wird.

13. Verfahren nach einem der Ansprüche 10 bis 12, wobei *Bacillus subtilis* QST713 mit einer Anwendungsrate von etwa 1 × 10² KBE pro Samen bis etwa 1 × 10⁹ KBE pro Samen angewendet wird.

14. Verfahren nach Anspruch 13, wobei *Bacillus subtilis* QST713 mit einer Anwendungsrate von etwa 1 × 10⁴ KBE pro Samen bis etwa 1 × 10⁷ KBE pro Samen angewendet wird.

15. Verfahren nach einem der Ansprüche 10 bis 14, wobei der Kältestress das Aussetzen gegenüber Temperaturen unter etwa 10°C umfasst.

16. Verfahren nach einem der Ansprüche 10 bis 15, wobei die Pflanze ausgewählt ist aus der Gruppe bestehend aus Sojabohne, Mais, Weizen, Triticale, Gerste, Hafer, Roggen, Raps, Hirse, Reis, Sonnenblume, Baumwolle, Zuckerrübe, Kernobst, Steinobst, Zitrusfrüchte, Banane, Erdbeere, Heidelbeere, Mandel, Traube, Mango, Papaya, Erdnuss, Kartoffel, Tomate, Paprika, Gurke, Melone, Wassermelone, Knoblauch, Zwiebel, Brokkoli, Karotte, Kohl, Bohne, Trockenbohne, Erbse, Linse, Luzerne, Klee, Flachs, Elefantengras, Gras, Kopfsalat, Zuckerrohr, Tee, Tabak und Kaffee; jeweils in ihrer natürlichen oder gentechnisch veränderten Form.

## Revendications

1. Utilisation de la souche QST713 de *Bacillus subtilis* pour améliorer la tolérance d'un végétal exposé au stress froid.

2. Utilisation selon la revendication 1, dans laquelle la tolérance améliorée est choisie dans le groupe consistant en
a) une augmentation de la germination après stress froid ;
b) une augmentation de la surface des cotylédons, des feuilles unifoliées et/ou trifoliées après stress froid ;
c) une augmentation du poids frais et/ou du poids sec des végétaux après stress froid ;
d) une augmentation de la hauteur des végétaux après stress froid ;
e) une amélioration de la vigueur des végétaux après stress froid ; et
f) une augmentation de la production de chlorophylle après stress froid.

3. Utilisation selon la revendication 1 ou 2, dans laquelle le *Bacillus subtilis* QST713 est appliqué au végétal, à une partie du végétal et/ou à un locus du végétal où le végétal a poussé, pousse ou est destiné à pousser.

4. Utilisation selon l'une quelconque des revendications 1 à 3, dans laquelle le *Bacillus subtilis* QST713 est appliqué en tant que traitement en sillon.

5. Utilisation selon l'une quelconque des revendications 1 à 3, dans laquelle le *Bacillus subtilis* QST713 est appliqué en tant que traitement de semences.

6. Utilisation selon l'une quelconque des revendications 1 à 3 et 5, dans laquelle le *Bacillus subtilis* QST713 est appliqué à un taux d'application d'environ 1 × 10² unités formatrices de colonies (UFC) par semence à environ 1 × 10⁹ UFC par semence.

7. Utilisation selon la revendication 6, dans laquelle le *Bacillus subtilis* QST713 est appliqué à un taux d'application d'environ 1 × 10⁴ UFC par semence à environ 1 × 10⁷ UFC par semence.

8. Utilisation selon l'une des revendications 1 à 7, dans laquelle le stress froid comprend l'exposition à des températures inférieures à environ 10°C.

9. Utilisation selon l'une quelconque des revendications 1 à 8, dans laquelle le végétal est choisi parmi le groupe constitué de soja, maïs, blé, triticale, orge, avoine, seigle, colza, millet, riz, tournesol, coton, betterave sucrière, fruit à pépins, fruit à noyau, agrume, banane, fraise, myrtille, amande, raisin, mangue, papaye, arachide, pomme de terre, tomate, poivron, cucurbitacée, concombre, melon, pastèque, ail, oignon, brocoli, carotte, chou, haricot, haricot sec, canola, pois, lentille, luzerne, lotier, trèfle, lin, herbe à éléphant, herbe, laitue, canne à sucre, thé, tabac et café, chacun sous sa forme naturelle ou génétiquement modifiée.

10. Méthode de traitement d'un végétal nécessitant une amélioration de la tolérance au stress froid, la méthode comprenant l'étape consistant à appliquer *Bacillus subtilis* QST713 au végétal, à une partie du végétal et/ou à un locus du végétal, en une quantité efficace pour améliorer la tolérance au stress froid.

11. Procédé selon la revendication 10, dans lequel la tolérance améliorée est choisie dans le groupe consistant en
a) une augmentation de la germination après stress froid ;
b) une augmentation de la surface des cotylédons, des feuilles unifoliées et/ou trifoliées après stress froid ;
c) une augmentation du poids frais et/ou du poids sec des végétaux après stress froid ;
d) une augmentation de la hauteur des végétaux après stress froid ;
e) une amélioration de la vigueur des végétaux après stress froid ; et
f) une augmentation de la production de chlorophylle après stress froid.

12. Procédé selon la revendication 10 ou 11, dans lequel le *Bacillus subtilis* QST713 est appliqué en tant que traitement en sillon et/ou en tant que traitement de semences.

13. Procédé selon l'une des revendications 10 à 12, dans lequel le *Bacillus subtilis* QST713 est appliqué à un taux d'application d'environ 1 × 10² UFC par graine à environ 1 × 10⁹ UFC par graine.

14. Procédé selon la revendication 13, dans lequel le *Bacillus subtilis* QST713 est appliqué à un taux d'application d'environ 1 × 10⁴ UFC par graine à environ 1 × 10⁷ UFC par graine.

15. Procédé selon l'une des revendications 10 à 14, dans lequel le stress froid comprend l'exposition à des températures inférieures à environ 10°C.

16. Procédé selon l'une quelconque des revendications 10 à 15, dans lequel le végétal est choisi parmi le groupe constitué de soja, maïs, blé, triticale, orge, avoine, seigle, colza, millet, riz, tournesol, coton, betterave sucrière, fruit à pépins, fruit à noyau, agrume, banane, fraise, myrtille, amande, raisin, mangue, papaye, arachide, pomme de terre, tomate, poivron, cucurbitacée, concombre, melon, pastèque, ail, oignon, brocoli, carotte, chou, haricot, haricot sec, canola, pois, lentille, luzerne, lotier, trèfle, lin, herbe à éléphant, herbe, laitue, canne à sucre, thé, tabac et café, chacun sous sa forme naturelle ou génétiquement modifiée.
